# EUROPEAN PATENT SPECIFICATION

(11) **EP 4 395 271 B1**
(45) Date of publication and mention of the grant of the patent: **11.02.2026**
(21) Application number: 22934817.2
(22) Date of filing: 16.11.2022
(51) Int. Cl.: H04L 47/32, H04L 47/20, H04L 43/028, H04L 43/0829, H04L 47/2483, H04L 43/16

(54) **DATA PACKET TRANSMISSION METHOD, COMMUNICATION DEVICE, COMPUTER-READABLE STORAGE MEDIUM, AND COMPUTER PROGRAM PRODUCT**
DATENPAKETÜBERTRAGUNGSVERFAHREN, KOMMUNIKATIONSVORRICHTUNG, COMPUTERLESBARES SPEICHERMEDIUM UND COMPUTERPROGRAMMPRODUKT
PROCÉDÉ DE TRANSMISSION DE PAQUETS DE DONNÉES, DISPOSITIF DE COMMUNICATION, SUPPORT DE STOCKAGE LISIBLE PAR ORDINATEUR ET PRODUIT PROGRAMME D'ORDINATEUR

(30) Priority: 29.03.2022 CN 202210315694
(43) Date of publication of application: 03.07.2024
(73) Proprietor: Tencent Technology (Shenzhen) Company Limited, Shenzhen, Guangdong, 518057 (CN)
(72) Inventor: ZHANG, Zhuoyun, Shenzhen, Guangdong 518057 (CN)
(74) Representative: Gunzelmann, Rainer
(86) International application number: PCT/CN2022/132210
(87) International publication number: WO 2023/184999

(56) References cited:
- WO-A1-2021/249039
- WO-A1-2022/036870
- CN-A- 107 222 427
- CN-A- 108 243 073
- CN-A- 110 798 860
- CN-A- 111 586 114
- US-A1- 2019 166 057
- US-A1- 2023 103 418
- US-A1- 2023 188 472

## Description

### RELATED APPLICATION

This application claims priority to Chinese Patent Application No. 202210315694.2 filed on March 29, 2022.

### FIELD OF THE TECHNOLOGY

The present disclosure relates to the field of communication technologies, and specifically, to data packet transmission optimisation methods and a communication device.

### BACKGROUND OF THE DISCLOSURE

During transmission of a data packet on a network, the data packet may be lost. This is referred to as packet loss. In some cases, the lost data packet may affect an unlost data packet, for example, cause the unlost data packet to be unavailable. In this case, if the network continues to transmit the unlost data packet, network resources are wasted, and efficiency of network transmission is reduced.

WO2021/249039A1 provides a communication method, which includes receiving, by a user plane network element, characteristic information of a service data flow, where the characterisinformation describes a characteristic of the service data flow. The user plane network element identifies a data packet group in the service data flow based on the characteristic information of the service data flow. The user plane network element sends the data packet group to an access network device.

WO2022/036870A1 provides a data transmission method, where a first data unit is received from a server or a data network, the first data unit comprises first identification information and second identification information, a target transmission requirement corresponding to the first data unit is obtained based on the first identification information, protocol data encapsulation is performed on the first data unit based on the target transmission requirement, to obtain a second data unit that comprises third identification information related to the second identification information; and the second data unit is sent to an access network device.

### SUMMARY

The invention is defined by the independent claims. Further aspects of the present invention are defined by the dependent claims.

**In** the embodiments of the present disclosure, a target data detection rule and a target processing rule for a target service flow are obtained. Therefore, when a to-be-forwarded data packet is received, a target data packet belonging to a target group of the target service flow may be determined from the to-be-forwarded data packet based on target data packet distinguishing information and a target group identifier that are included in the target data detection rule. Then whether the to-be-forwarded data packet belongs to a target to-be-discarded group may be determined based on a target-group data packet loss threshold included in the target processing rule and data packet loss information in the target group. When it is determined that the to-be-forwarded data packet belongs to the target to-be-discarded group, the transmission of the to-be-forwarded data packet belonging to the target to-be-discarded group is stopped. This optimizes a network transmission process, and reduces data transmission load of a network.

### BRIEF DESCRIPTION OF THE DRAWINGS

FIG. 1 is a schematic architectural diagram of a communication system according to an embodiment not forming part of the present disclosure.
FIG. 2 is a diagram of a system architecture of a 5G network according to an embodiment not forming part of the present disclosure.
FIG. 3 is a flowchart of a data packet transmission method according to an embodiment of the present disclosure.
FIG. 4 is a schematic interaction diagram of a data packet transmission method according to an embodiment of the present disclosure.
FIG. 5 is a schematic interaction diagram of a data packet transmission method according to another embodiment of the present disclosure.
FIG. 6 is a schematic interaction diagram of a data packet transmission method according to still another embodiment of the present disclosure.
FIG. 7 is a schematic interaction diagram of a data packet transmission method according to yet another embodiment of the present disclosure.
FIG. 8 is a schematic interaction diagram of a data packet transmission method according to yet another embodiment of the present disclosure.
FIG. 9 is a schematic interaction diagram of a data packet transmission method according to yet another embodiment of the present disclosure.
FIG. 10 is a schematic interaction diagram of a data packet transmission method according to yet another embodiment of the present disclosure.
FIG. 11 is a flowchart of a data packet transmission method according to another embodiment of the present disclosure.
FIG. 12 is a flowchart of a data packet transmission method according to still another embodiment of the present disclosure.
FIG. 13 is a block diagram of a user plane function network element according to an embodiment of the present disclosure.
FIG. 14 is a block diagram of a policy control function network element according to an embodiment of the present disclosure.
FIG. 15 is a schematic structural diagram of a communication equipment according to an embodiment of the present disclosure.

### DESCRIPTION OF EMBODIMENTS

To make the objectives, technical solutions, and advantages of the present disclosure clearer, the following describes exemplary embodiments of the present disclosure in detail with reference to the accompanying drawings. In the accompanying drawings, the same reference numerals represent the same elements. The embodiments described herein are merely exemplary and are not to be construed as a limitation on the scope of the present disclosure.

The technical solutions in the embodiments of the present disclosure may be applied to various communication systems, such as a global system for mobile communications (GSM), a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, a universal mobile telecommunications system (UMTS), a worldwide interoperability for microwave access (WiMAX) communication system, a 5G system, or a future evolved mobile communication system.

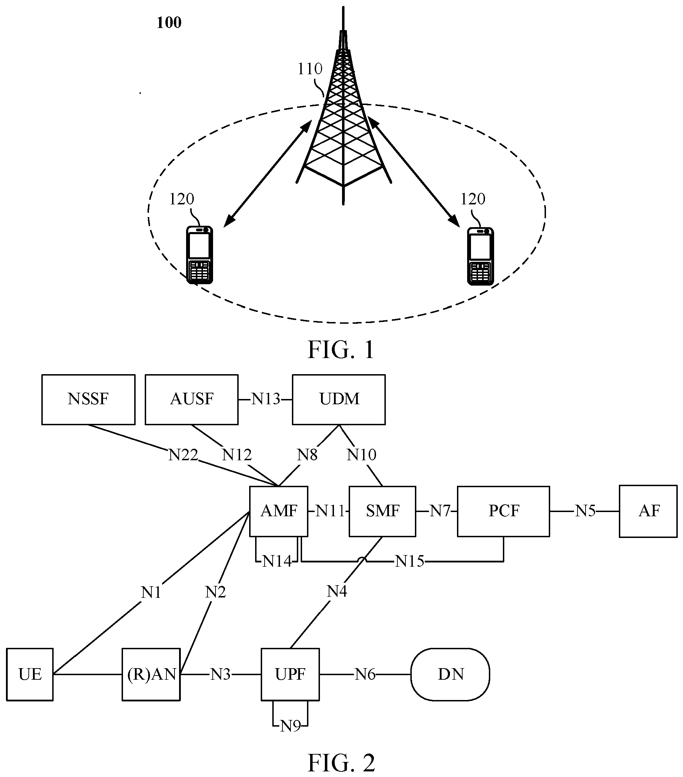

For example, a communication system 100 to which the embodiments of the present disclosure are applied is shown in FIG. 1. The communication system 100 may include a network device 110. The network device 110 may be a device that communicates with a terminal 120 (or referred to as a communication terminal or a terminal). The network device 110 may provide communication coverage for a specific geographic area, and may communicate with a terminal located within the coverage area. In some embodiments, the network device 110 may be a base transceiver station (BTS) in a GSM system or a CDMA system, or may be a NodeB (NB) in a WCDMA system, or may be an evolved NodeB (eNB or eNodeB) in an LTE system, or may be a base station in a 5G communication system or a wireless controller in a cloud radio access network (CRAN). Alternatively, the network device may be a mobile switching center, a relay station, an access point, a vehicle-mounted device, a wearable device, a hub, a switch, a bridge, a router, a network-side device in a 5G network, a network device in a future evolved public land mobile network (PLMN), or the like.

The communication system 100 further includes at least one terminal 120 located within the coverage area of the network device 110. The "terminal" used herein includes but is not limited to: being connected through a wired line, for example, being connected through a public switched telephone network (PSTN), a digital subscriber line (DLS), a digital cable, a direct cable; and/or being connected through another data connection/network; and/or being connected through a wireless interface, for example, a cellular network, a wireless local area network (WLAN), a digital television network such as a DVB-H network, a satellite network, or an AM-FM broadcast transmitter; and/or being connected through an apparatus, configured to receive/transmit a communication signal, of another terminal; and/or being connected through an Internet of Things (IoT) device. A terminal configured to perform communication through a wireless interface may be referred to as a "wireless communication terminal", a "wireless terminal", or a "mobile terminal". Examples of the mobile terminal include but are not limited to a satellite or cellular phone, a personal communications system (PCS) terminal that may combine a cellular radio phone with data processing, fax, and data communication capabilities, a PDA that may include a radio phone, a pager, Internet/intranet access, a web browser, a notepad, a calendar, and/or a global positioning system (GPS) receiver, and a conventional laptop and/or palmtop receiver or other electronic apparatuses including a radio phone transceiver. The terminal may be an access terminal, user equipment (UE), a subscriber unit, a subscriber station, a mobile station, a mobile console, a remote station, a remote terminal, a mobile device, a user terminal, a terminal, a wireless communication device, a user agent, or a user apparatus. The access terminal may be a cellular phone, a cordless phone, a session initiation protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal in a 5G network, a terminal in a future evolved PLMN, or the like.

In some embodiments, device-to-device (D2D) communication may be performed between terminals 120.

FIG. 1 shows one network device and two terminals as an example. In some embodiments, the communication system 100 may include a plurality of network devices, and a coverage area of each network device may include another quantity of terminals. This is not limited in the embodiments of the present disclosure.

In some embodiments, the communication system 100 may further include other network elements such as a policy control function network element and an access and mobility management function network element. This is not limited in the embodiments of the present disclosure.

It is to be understood that a device with a communication capability in a network/system in the embodiments of the present disclosure may be referred to as a communication device. The communication system 100 shown in FIG. 1 is used as an example. The communication device may include the network device 110 and the terminal 120 that have a communication function. The network device 110 and the terminal 120 may be specific devices described above. Details are not described again herein.

It is to be understood that the terms "system" and "network" in this specification are usually used interchangeably in this specification. The term "and/or" in this specification describes only an association relationship between associated objects and indicates that three relationships may exist. For example, A and/or B may indicate the following three cases: Only A exists, both A and B exist, and only B exists.

FIG. 2 is a diagram of a system architecture of a 5G network according to an embodiment of the present disclosure. As shown in FIG. 2, devices in the 5G network system include UE, a radio access network (RAN), a user plane function (UPF) network element, a data network (DN), an access and mobility management function (AMF) network element, a session management function (SMF) network element, a policy control function (PCF) network element, an application function (AF) network element, an authentication server function (AUSF) network element, a unified data management (UDM) network element, and a network slice selection function (NSSF).

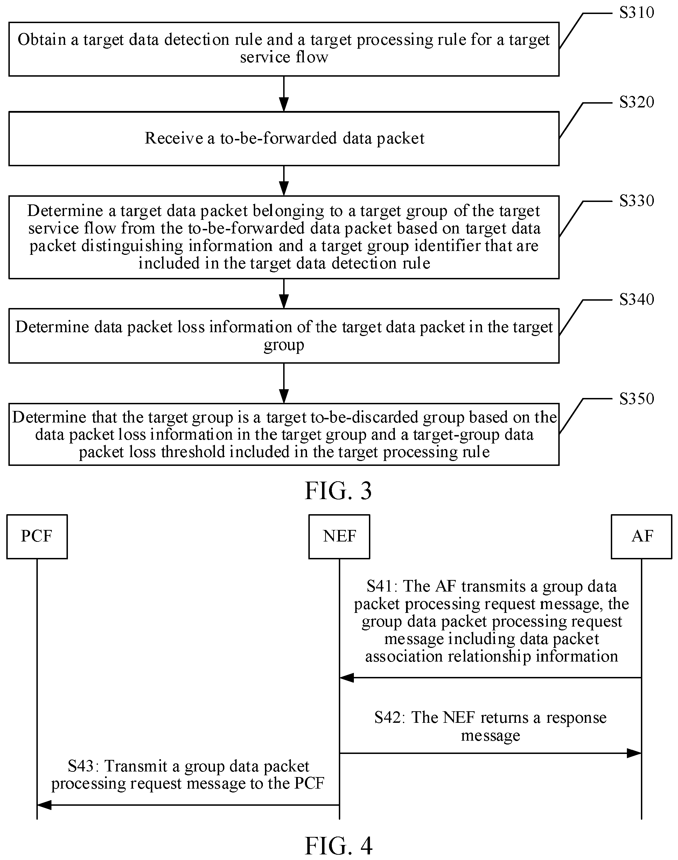

FIG. 3 is a flowchart of a data packet transmission method according to an embodiment of the present disclosure. The method provided in FIG. 3 may be performed by various communication devices, for example, by a UPF network element and/or a network device (for example, a base station). The network device in this embodiment of the present disclosure may be, for example, the network device 110 in FIG. 1, but this embodiment of the present disclosure is not limited thereto. Any communication device that needs to detect and process a data packet may use the method provided in this embodiment of the present disclosure.

As shown in FIG. 3, the method provided in this embodiment of the present disclosure may include S310 to S350. Details are described below.

In S310, a target data detection rule and a target processing rule for a target service flow are obtained.

In this embodiment of the present disclosure, the UPF network element or the network device may obtain the target data detection rule and the target processing rule for the target service flow, or both the UPF network element and the network device may obtain the target data detection rule and the target processing rule for the target service flow.

In an exemplary embodiment, the UPF network element and/or the network device may obtain the target data detection rule and the target processing rule from an SMF network element.

In this embodiment of the present disclosure, the target service flow is a service flow formed by transmitting, on a network, a target data packet transmitted by a target terminal and/or a target service server, and is transmitted for one or more target services. The target service may be set according to an actual requirement, for example, may be video conferencing or network livestreaming.

In this embodiment of the present disclosure, the target data detection rule is configured to detect a received to-be-forwarded data packet to determine whether the received to-be-forwarded data packet belongs to target data of the target service flow.

In this embodiment of the present disclosure, a group of data packets in a dependency relationship may be categorized as the same group of data packets. During packaging for data packets belonging to the same group, a corresponding group identifier may be encapsulated to indicate that the data packets belong to the group. Correspondingly, data packets belonging to the target service flow and belonging to the same group are referred to as target data packets belonging to a target group of the target service flow, and the target data packets have a target group identifier.

In this embodiment of the present disclosure, during determining whether different data packets have a dependency relationship, configuration may be performed based on an actual scenario. For example, in a case that a data packet transmits encoded image or video data, after receiving the encoded image or video data packet, a client side (which may correspond to a target terminal side) or a service server side (for example, a target service server below, where the target service server may be a server corresponding to the target service) decodes the data packet and determines whether reference needs to be made to another data packet. Different data packets with reference value during decoding may be considered as having a dependency relationship. Different data packets without reference value during decoding may be considered as having no dependency relationship.

The H.246 video coding standard is used as an example, and includes an I-frame, a P-frame, and a B-frame.

The I-frame is referred to as an intra-coded frame. A complete image can be reconstructed only by using data of the I-frame. Therefore, there is no dependency relationship between data packets including two different I-frames.

The P-frame is referred to as a forward-predictive coded frame. The P-frame records a difference from a previous frame (for example, an I-frame or a P-frame). Therefore, during decoding of the P-frame, reference needs to be made to the previous frame. In this case, the previous frame has reference value for the current to-be-decoded P-frame. Therefore, there is a dependency relationship between a data packet including the previous I-frame or P-frame and a data packet including the current to-be-decoded P-frame.

The B-frame is referred to as a bidirectional-predictive interpolated coded frame. When a frame is compressed into a B-frame, the frame is compressed based on data of an adjacent previous frame, the frame, and a next frame. To be specific, the B-frame records a difference from the previous frame and a difference from the next frame. Therefore, during decoding of the B-frame, reference needs to be made to the previous frame and the next frame, and the previous frame and the next frame have reference value for the decoding of the B-frame. Therefore, there is a dependency relationship between a data packet including the previous frame and a data packet including the B-frame and between a data packet including the next frame and the data packet including the B-frame.

For the same group of data packets with a dependency relationship, in a case that a data packet in the group is lost due to congestion or other causes, decoding of an image or a video corresponding to the group of data packets may not be completed on a client side or a server side. Therefore, network transmission may be correspondingly optimized.

In this embodiment of the present disclosure, after the target data packet belonging to the target group of the target service flow is determined according to the target data detection rule, the target processing rule is used for processing the target data packet.

In S320, a to-be-forwarded data packet is received.

In this embodiment of the present disclosure, the to-be-forwarded data packet may include a to-be-forwarded uplink data packet transmitted by the target terminal and received by the UPF network element, and/or may include a to-be-forwarded downlink data packet transmitted by the target service server and received by the UPF network element, and/or may include a to-be-forwarded uplink data packet transmitted by the target terminal and received by the network device, and/or may include a to-be-forwarded downlink data packet transmitted by the target service server and received by the network device.

In S330, a target data packet belonging to a target group of the target service flow is determined from the to-be-forwarded data packet based on target data packet distinguishing information and a target group identifier that are included in the target data detection rule.

In this embodiment of the present disclosure, the target data detection rule includes the target data packet distinguishing information and the target group identifier. The target data packet distinguishing information is any related information that can be used for distinguishing whether the to-be-forwarded data packet belongs to the target data packet in the target group of the target service flow, and may include at least one of target service flow template information, target data network name (DNN) information of the target service flow, target single network slice selection assistance information (S-NSSAI) information, and/or the like. The UPF network element and/or the network device may determine, based on the target data packet distinguishing information, whether the received to-be-forwarded data packet belongs to the target data packet in the target group.

In this embodiment of the present disclosure, the target group identifier is identification information used for indicating that the target data packet belongs to the target group.

In S340, data packet loss information of the target data packet in the target group is determined.

In this embodiment of the present disclosure, the UPF network element and/or the network device may obtain the data packet loss information in the target group, for example, may determine the data packet loss information in the target group based on the target group identifier and a packet sequence number of the received to-be-forwarded data packet. The data packet loss information may include a quantity of lost packets and/or a packet loss ratio of the target data packet, and may further include a packet sequence number of a specific lost target data packet or the like.

The packet loss ratio is a ratio of a quantity of lost data packets to a total quantity of data packets in the target group.

In S350, it is determined that the target group is a target to-be-discarded group based on the data packet loss information in the target group and a target-group data packet loss threshold included in the target processing rule.

The target-group data packet loss threshold may be set by a user of the target service, or may be set by an operation and maintenance perform of the target service in the background, for example, may be 100.

In this embodiment of the present disclosure, the target processing rule may include the target-group data packet loss threshold. The UPF network element and/or the network device may determine whether data packet loss information in the target group exceeds the target-group data packet loss threshold. In a case that the data packet loss information in the target group exceeds the target-group data packet loss threshold, it can be determined that the target group is a target to-be-discarded group, and a data packet in the target to-be-discarded group is referred to as a target data packet. In this way, a target data packet, in the target to-be-discarded group, that is still transmitted on a network (namely, not lost) is considered as a remaining data packet, and the remaining data packet is no longer transmitted on the network. For example, the remaining target data packet in the target to-be-discarded group may be discarded to reduce network transmission load.

In a case that the data packet loss information in the target group does not exceed the target-group data packet loss threshold, it can be determined that the target group is not a target to-be-discarded group. In this case, a remaining target data packet in the target group may be further transmitted on a network without affecting correct decoding of a data packet on the client side or the target service server side.

In this embodiment of the present disclosure, the target-group data packet loss threshold is used for determining acceptable data packet loss information in the target group, for example, one or more of an acceptable quantity of lost data packets, an acceptable packet loss ratio, a specific packet whose loss is acceptable, or the like.

For example, due to a fault tolerance and redundancy mechanism of a video decoding algorithm provided in the related art, correct decoding on the client side or the service server side is not affected even if some target data packets in the target group are lost within the target-group data packet loss threshold. After the target-group data packet loss threshold is exceeded, decoding on the client side or the service server side cannot be performed correctly.

It can be understood that the target data detection rule and the target processing rule may be combined into one rule, divided into different rules, used as a part of another rule, or used as a part of a quality of service (QoS) profile. The rules may have different names based on different execution entities. This is not limited in the embodiments of the present disclosure.

An example in which the UPF network element obtains the target data detection rule and the target processing rule is used below for description. In a case that the UPF network element performs the method shown in FIG. 3, S310 may include: The UPF network element obtains the target data detection rule and the target processing rule from the SMF network element.

S320 may include: The UPF network element receives a to-be-forwarded downlink data packet from the target service server. The to-be-forwarded data packet may include the to-be-forwarded downlink data packet.

S330 may include: The UPF network element determines a target downlink data packet belonging to the target group from the to-be-forwarded downlink data packet based on the target data packet distinguishing information and the target group identifier. The target data packet may include the target downlink data packet.

S340 may include: The UPF network element determines first downlink data packet loss information of the target downlink data packet in the target group. The data packet loss information may include the first downlink data packet loss information.

**In** this embodiment of the present disclosure, the first downlink data packet loss information is one or more of a quantity of lost packets, a packet loss ratio, a sequence number of a lost packet, or the like of the target downlink data packet in the target group.

S350 may include: The UPF network element determines whether the first downlink data packet loss information exceeds the target-group data packet loss threshold. In a case that the first downlink data packet loss information exceeds the target-group data packet loss threshold, the UPF network element determines that the target group is a target to-be-discarded group. After the UPF network element determines that the target group is a target to-be-discarded group, the UPF network element no longer transmits a remaining downlink data packet belonging to the target to-be-discarded group on the network, for example, no longer transmits the remaining downlink data packet to the network device.

**In** an exemplary embodiment, the target data detection rule may further include an uplink/downlink effective indication. The uplink/downlink effective indication may be used for indicating one of the following cases: The target data detection rule is effective for a target uplink data packet, the target data detection rule is effective for a target downlink data packets, or the target data detection rule is effective for both a target uplink data packet and a target downlink data packet.

**In** an exemplary embodiment, the determining that the target group is a target to-be-discarded group based on a target-group data packet loss threshold included in the target processing rule and the data packet loss information in the target group may include: The user plane function network element and/or the network device determine, based on the uplink/downlink effective indication, whether the target data detection rule is effective for an uplink service flow, a downlink service flow, or an uplink/downlink service flow of the target service flow; and in the case of determining that the target data detection rule is effective for a downlink service flow and determining that the target data packet belongs to a downlink service flow of the target service flow, determine whether the target group is a target to-be-discarded group based on the target-group data packet loss threshold and the data packet loss information; in the case of determining that the target data detection rule is effective for an uplink service flow and determining that the target data packet belongs to an uplink service flow of the target service flow, determine whether the target group is a target to-be-discarded group based on the target-group data packet loss threshold and the data packet loss information; or in the case of determining that the target data detection rule is effective for an uplink/downlink service flow, separately detect an uplink service flow and a downlink service flow of the target service flow, and determine whether a target group to which the uplink service flow or the downlink service flow belongs is a target to-be-discarded group based on the target-group data packet loss threshold and the data packet loss information.

**In** this embodiment of the present disclosure, S350 may include: The UPF network element determines whether the target data detection rule is effective in uplink, downlink, or uplink/downlink based on the uplink/downlink effective indication; and in the case of determining that the target data detection rule is effective in downlink or uplink/downlink, the UPF network element determines whether the first downlink data packet loss information exceeds the target-group data packet loss threshold; and in a case that the first downlink data packet loss information exceeds the target-group data packet loss threshold, the UPF network element determines that the target group is a target to-be-discarded group.

In this embodiment of the present disclosure, in a case that the uplink/downlink effective indication in the target data detection rule indicates that the target data detection rule is effective only for a target uplink data packet, even if the first downlink data packet loss information exceeds the target-group data packet loss threshold, the target group is not determined as a target to-be-discarded group, that is, the target downlink data packet is still transmitted on the network, for example, transmitted to the network device. Network transmission of the target data packet of the target service flow can be more accurately detected and processed based on the uplink/downlink effective indication.

S350 may further include: In a case that the first downlink data packet loss information does not exceed the target-group data packet loss threshold, the UPF network element transmits the target downlink data packet to the network device.

In an exemplary embodiment, the target-group data packet loss threshold may include a first target-group downlink data packet loss threshold. The UPF network element may determine whether the first downlink data packet loss information exceeds the first target-group downlink data packet loss threshold; and in a case that the first downlink data packet loss information exceeds the first target-group downlink data packet loss threshold, determine that the target group is a target to-be-discarded group; or in a case that the first downlink data packet loss information does not exceed the first target-group downlink data packet loss threshold, determine that the target group is not a target to-be-discarded group.

In a case that the network device performs the method shown in FIG. 3, S310 may further include: The network device obtains the target data detection rule and the target processing rule from the SMF network element.

In an exemplary embodiment, that the network device obtains the target data detection rule and the target processing rule from the SMF network element may include: The network device receives, through an AMF network element, quality of service (QoS) profile information transmitted by the SMF network element. The quality of service profile information may include the target data detection rule and the target processing rule. To be specific, the network device, for example, a base station, may obtain the target data detection rule and the target processing rule from the SMF network element through the AMF network element.

S320 may further include: The network device receives a target downlink data packets from the UPF network element. The to-be-forwarded data packet may include the target downlink data packet.

In an exemplary embodiment, a target downlink data packet transmitted by the target service server may be sequentially detected and processed by the UPF network element and the network device. To be specific, the UPF network element first detects a received target downlink data packet by using the target data detection rule, and then processes the target downlink data packet by using the target processing rule; and in a case that the UPF network element determines that the target group is a target to-be-discarded group, the UPF network element no longer transmits the target downlink data packet to the network device; or in a case that the UPF network element determines that the target group is not a target to-be-discarded group, the UPF network element continues to transmit the target downlink data packet to the network device. In a process of transmitting the target downlink data packet to the network device by the UPF network element, data loss may occur in the target downlink data packet. In this case, the network device may detect and process a received target downlink data packet by using the target data detection rule and the target processing rule.

In some embodiments, S330 may further include: The network device determines a target downlink data packet belonging to the target group from the received to-be-forwarded data packet based on the target data packet distinguishing information and the target group identifier.

In some embodiments, S340 may further include: The network device determines second downlink data packet loss information of the target downlink data packet in the target group. The data packet loss information may include the second downlink data packet loss information.

In this embodiment of the present disclosure, the first downlink data packet loss information is packet loss information of the target downlink data packet during network transmission from the target service server to the UPF network element. In some embodiments, the second downlink data packet loss information includes the first downlink data packet loss information, and may further include packet loss information of the target downlink data packet during network transmission from the UPF network element to the network device. Correspondingly, the second downlink data packet loss information is greater than or equal to the first downlink data packet loss information.

In some other embodiments, the second downlink data packet loss information may alternatively be independent of (in other words, not included in) the first downlink data packet loss information, and is packet loss information detected by the network device. Correspondingly, there is no specific association relationship between the second downlink data packet loss information and the first downlink data packet loss information.

In some embodiments, S350 may further include: The network device determines whether the second downlink data packet loss information exceeds the target-group data packet loss threshold. In a case that the second downlink data packet loss information exceeds the target-group data packet loss threshold, the network device determines that the target group is a target to-be-discarded group. To be specific, the network device may discard an unlost target downlink data packet in the target to-be-discarded group, that is, no longer transmit the unlost target downlink data packet to the target terminal. In a case that the network device determines that the target group is not a target to-be-discarded group, the network device continues to transmit the target downlink data packet to the target terminal. In this embodiment of the present disclosure, the UPF network element and the network device perform double detection and processing on the target downlink data packet, to further reduce network transmission load and improve network transmission efficiency.

In an exemplary embodiment, in a case that the uplink/downlink effective indication in the target data detection rule indicates that the target data detection rule is effective only for a target uplink data packet, even if the second downlink data packet loss information exceeds the target-group data packet loss threshold, the network device does not determine the target group as a target to-be-discarded group, that is, continues to transmit the target downlink data packet, for example, to the target terminal. Network transmission of the target data packet of the target service flow can be more accurately detected and processed based on the uplink/downlink effective indication.

In an exemplary embodiment, the target-group data packet loss threshold may include a second target-group downlink data packet loss threshold. The network device may determine whether the second downlink data packet loss information exceeds the second target-group downlink data packet loss threshold; and in a case that the second downlink data packet loss information exceeds the second target-group downlink data packet loss threshold, determine that the target group is a target to-be-discarded group; or in a case that the second downlink data packet loss information does not exceed the second target-group downlink data packet loss threshold, determine that the target group is not a target to-be-discarded group.

In this embodiment of the present disclosure, the first target-group downlink data packet loss threshold may or may not be equal to the second target-group downlink data packet loss threshold.

It can be understood that, in other embodiments, alternatively, only the UPF network element or the network device may be configured to detect and process the target downlink data packet transmitted by the target service server. This is not limited in the embodiments of the present disclosure. In addition, in a case that three or more communication devices need to detect the target downlink data packet during network transmission, all the three or more communication devices may obtain the target data detection rule and the target processing rule from the SMF network element to detect and process the target downlink data packet for three or more times.

In the following exemplary descriptions, the network device may detect and process, by using the target detection rule and the target processing rule, a to-be-forwarded uplink data packet transmitted by the target terminal such as UE.

In some embodiments, S320 may include: The network device receives a to-be-forwarded uplink data packet from the target terminal. The to-be-forwarded data packet may include the to-be-forwarded uplink data packet.

In some embodiments, S330 may include: The network device determines a target uplink data packet belonging to the target group from the to-be-forwarded uplink data packet based on the target data packet distinguishing information and the target group identifier. The target data packet may include the target uplink data packet.

In some embodiments, S340 may include: The network device determines first uplink data packet loss information of the target uplink data packet in the target group. The data packet loss information may include the first uplink data packet loss information.

S350 may include: The network device determines whether the first uplink data packet loss information exceeds the target-group data packet loss threshold; and in a case that the first uplink data packet loss information exceeds the target-group data packet loss threshold, the network device determines that the target group is a target to-be-discarded group.

In an exemplary embodiment, in a case that the target data detection rule further includes an uplink/downlink effective indication, S350 may include: The network device determines, based on the uplink/downlink effective indication, whether the target data detection rule is effective for an uplink service flow, a downlink service flow, or an uplink/downlink service flow of the target service flow. In the case of determining that the target data detection rule is effective for an uplink service flow or an uplink/downlink service flow, the network device determines whether the first uplink data packet loss information exceeds the target-group data packet loss threshold. In a case that the first uplink data packet loss information exceeds the target-group data packet loss threshold, the network device determines that the target group is a target to-be-discarded group. In this case, the base station no longer transmits a target uplink data packet in the target to-be-discarded group on the network, for example, no longer transmits the target uplink data packet to the UPF network element, to reduce network transmission load.

In this embodiment of the present disclosure, in a case that the uplink/downlink effective indication in the target data detection rule indicates that the target data detection rule is effective only for a target downlink data packet, even if the first uplink data packet loss information exceeds the target-group data packet loss threshold, the target group is not determined as a target to-be-discarded group, that is, the target uplink data packet is still transmitted on the network, for example, transmitted to the UPF network element. Network transmission of the target data packet of the target service flow can be more accurately detected and processed based on the uplink/downlink effective indication.

Correspondingly, the target-group data packet loss threshold may include a first target-group uplink data packet loss threshold. The UPF network element may determine whether the first uplink data packet loss information exceeds the first target-group uplink data packet loss threshold; and in a case that the first uplink data packet loss information exceeds the first target-group uplink data packet loss threshold, determine that the target group is a target to-be-discarded group; or in a case that the first uplink data packet loss information does not exceed the first target-group uplink data packet loss threshold, determine that the target group is not a target to-be-discarded group.

**In** some embodiments, S350 may further include: In a case that the first uplink data packet loss information does not exceed the target-group data packet loss threshold, the network device transmits the target uplink data packet to the UPF network element.

**In** this embodiment of the present disclosure, when receiving the target uplink data packet from the network device such as a base station, the UPF network element may continue to detect and process the target uplink data packet by using the target data detection rule and the target processing rule.

**In** some embodiments, S320 may further include: The UPF network element receives the target uplink data packet from the network device. The to-be-forwarded data packet may include the target uplink data packet.

In some embodiments, S330 may further include: The UPF network element determines a target uplink data packet belonging to the target group from the received to-be-forwarded data packet based on the target data packet distinguishing information and the target group identifier.

In some embodiments, S340 may further include: The UPF network element determines second uplink data packet loss information of the target uplink data packet in the target group. The data packet loss information may include the second uplink data packet loss information.

In some embodiments, S350 may further include: The UPF network element determines whether the second uplink data packet loss information exceeds the target-group data packet loss threshold; and in a case that the second uplink data packet loss information exceeds the target-group data packet loss threshold, the UPF network element determines that the target group is a target to-be-discarded group.

In this embodiment of the present disclosure, in a case that the uplink/downlink effective indication in the target data detection rule indicates that the target data detection rule is effective only for a target downlink data packet, even if the second uplink data packet loss information exceeds the target-group data packet loss threshold, the UPF network element does not determine the target group as a target to-be-discarded group, that is, continues to transmit the target uplink data packet on the network, for example, to the target service server. Network transmission of the target data packet of the target service flow can be more accurately detected and processed based on the uplink/downlink effective indication.

Correspondingly, the target-group data packet loss threshold may include a second target-group uplink data packet loss threshold. The UPF network element may determine whether the second uplink data packet loss information exceeds the second target-group uplink data packet loss threshold; and in a case that the second uplink data packet loss information exceeds the second target-group uplink data packet loss threshold, determine that the target group is a target to-be-discarded group; or in a case that the second uplink data packet loss information does not exceed the second target-group uplink data packet loss threshold, determine that the target group is not a target to-be-discarded group.

In this embodiment of the present disclosure, the first target-group downlink data packet loss threshold, the second target-group downlink data packet loss threshold, the first target-group uplink data packet loss threshold, and the second target-group uplink data packet loss threshold may be the same or different, or may be partially the same and partially different. This is not limited in the present disclosure.

It can be understood that, in other embodiments, alternatively, only the UPF network element or the network device may be configured to detect and process the target uplink data packet transmitted by the target terminal. This is not limited in the present disclosure. In addition, in a case that three or more communication devices need to detect the target uplink data packet during entire network transmission of the target uplink data packet, all the three or more communication devices may obtain the target data detection rule and the target processing rule from the SMF network element to detect and process the target uplink data packet for three or more times.

In an exemplary embodiment, in a case that congestion occurs and some data packets need to be discarded, the UPF network element and/or the network device may determine the data packet loss information of the target data packet in the target group; and in a case that the UPF network element and/or the network device are not congested, the UPF network element and/or the network device are capable of transmitting all received target data packets, and may not need to determine the data packet loss information. However, the embodiments of the present disclosure are not limited thereto. In other embodiments, the UPF network element and/or the network device may still determine the data packet loss information without congestion. To be specific, the UPF network element and/or the network device are capable of transmitting all received target data packets; however, in a case that the UPF network element and/or the network device determine, based on the data packet loss information, that a received target data packet in the target group cannot be used even if the target data packet is successfully received by the target service server or the target terminal, the UPF network element and/or the network device may also discard the target data packet in the target group, to reduce network transmission load.

In the data packet transmission method provided in this embodiment of the present disclosure, a target data detection rule and a target processing rule for a target service flow are obtained. Therefore, when a to-be-forwarded data packet is received, a target data packet belonging to a target group of the target service flow may be determined from the to-be-forwarded data packet based on target data packet distinguishing information and a target group identifier that are included in the target data detection rule. Then whether the to-be-forwarded data packet belongs to a target to-be-discarded group may be determined based on a target-group data packet loss threshold included in the target processing rule and data packet loss information in the target group. When it is determined that the to-be-forwarded data packet belongs to the target to-be-discarded group, the to-be-forwarded data packet belonging to the target to-be-discarded group may not be further transmitted during network transmission. This optimizes a network transmission process, and reduces data transmission load of a network.

An embodiment of FIG. 4 shows a schematic diagram of an interactive service requirement of an AF. As shown in FIG. 4, a method provided in this embodiment of the present disclosure may include the following steps:
In S41, an AF network element transmits a group data packet processing request message to a network exposure function (NEF) network element.

In this embodiment of the present disclosure, the group data packet processing request message may include data packet association relationship information and related information for determining whether a data packet can be discarded or no longer transmitted during network transmission.

For example, the data packet association relationship information may include a recoverable threshold for the same group of data packets.

In this embodiment of the present disclosure, the recoverable threshold for the same group of data packets is the foregoing target-group data packet loss threshold, and is used for indicating: In a case that a quantity of lost data packets or a loss ratio in the same group exceeds this value, processing on a target terminal side or a target service server side cannot be performed correctly, and consequently, other unlost data packets in the same group cannot be used; or in a case that a quantity of lost data packets or a loss ratio in the same group does not exceed this value, processing on a target terminal side or a target service server side can be performed correctly, that is, other unlost data packets in the same group can be used.

In some embodiments, the group data packet processing request message transmitted by the AF network element to the NEF network element may further include at least one of AF identification information (represented by an AF ID), a target group identifier of a target data packet, target service flow distinguishing information, and the like. The target service flow distinguishing information is the foregoing target data packet distinguishing information, and may include at least one of target service flow template information, target DNN information of the target service flow, target S-NSSAI information, and/or the like.

In an exemplary embodiment, the target service flow template information may include one or more of a source IP address (a source network address), a source port number, a destination IP address (a destination network address), a destination port number, a fully qualified domain name (FQDN), an application identity (APP ID), and the like of the target service flow.

In some embodiments, the data packet association relationship information transmitted by the AF network element to the NEF network element may further include a data packet quantity range of a target group. The data packet quantity range of the target group may be used for indicating a quantity of target data packets to be packaged by the target terminal and/or the target service server by using a target group identifier.

In this embodiment of the present disclosure, the data packet quantity range of the target group has an upper limit and a lower limit, and an average value may be further calculated. The target terminal and/or the target service server may select, based on an actual target service flow, the upper limit, the lower limit, or the average value to package the target data packets by using the target group identifier.

For example, in a case that the data packet quantity range of the target group is 1000-1200, the target terminal may determine, within the range of 1000-1200 according to a service requirement, a quantity of uplink data packets to be packaged by using the target group identifier. For example, during video or image transmission, in a case that a high resolution is required, 1200 target uplink data packets may be selected and packaged as belonging to the target group; or in a case that a low resolution is required, 1000 target uplink data packets may be selected and packaged as belonging to the target group. However, the embodiments of the present disclosure are not limited thereto.

In some embodiments, the data packet association relationship information transmitted by the AF network element to the NEF network element may alternatively include a plurality of (two or more) target-group data packet grades or target data packet levels. Different target-group data packet grades or target data packet levels indicate that different quantities of target data packets are marked by using a target group identifier as belonging to the same target group, to indicate the target terminal and/or the target service server to select a corresponding target-group data packet grade or target data packet level based on an actual target service flow.

In some embodiments, the data packet association relationship information transmitted by the AF network element to the NEF network element may further include a target-group data packet quantity. The target-group data packet quantity may be used for indicating a quantity of target data packets to be packaged by the target terminal and/or the target service server by using a target group identifier. To be specific, the data packet association relationship information may alternatively indicate, by using a specific value, a quantity of target data packets to be categorized by the target terminal and/or the target service server into one target group.

In S42, the NEF network element returns a response message to the AF network element.

In this embodiment of the present disclosure, the AF network element may transmit the group data packet processing request message to the NEF network element, where the group data packet processing request message may carry the data packet association relationship information. After receiving the group data packet processing request message transmitted by the AF network element, the NEF network element may authenticate the group data packet processing request message, generate a corresponding response message, and return the response message to the AF network element. The group data packet processing request message may include a first request message and a second request message described below. Correspondingly, the response message may include a first response message and a second response message described below.

In an example of authentication, the AF network element adds an authentication code, such as a token or a media access control (MAC) address, to the group data packet processing request message, encrypts the message, and transmits the message to the NEF network element. The NEF network element performs an authentication operation on a decrypted message by using an agreed-upon algorithm, and compares an obtained authentication code with the received authentication code. In a case that the two authentication codes are the same, the authentication succeeds, and the NEF network element determines that the group data packet processing request message is valid. Otherwise, the authentication fails, and the NEF network element determines that the group data packet processing request message is invalid, and does not respond.

The response message may include indication information indicating whether the request message is approved. In a case that the authentication on the group data packet processing request message succeeds, the indication information indicates that the group data packet processing request message is approved. In a case that the authentication on the group data packet processing request message fails, the indication information indicates that the group data packet processing request message is rejected. In some embodiments, the indication information may further include a rejection cause value.

In some embodiments, in a case that the group data packet processing request message transmitted by the AF network element to the NEF network element does not include a target group identifier, the response message may further include a target group identifier.

In S43, the NEF network element transmits a group data packet processing request message to a PCF.

For example, the NEF network element directly or indirectly transmits the group data packet processing request message to the PCF network element.

In this embodiment of the present disclosure, after the NEF network element successfully authenticates the group data packet processing request message, the NEF network element may transmit data packet association relationship information, target service flow distinguishing information, and the like that are carried in the group data packet processing request message to the PCF network element as group data packet processing request information. The group data packet processing request information is related information for requesting to process a target data packet belonging to a target group of a target service flow. The processing herein includes detecting whether a data packet belongs to the target data packet of the target group of the target service flow. In the case of detecting that the data packet belongs to the target data packet, whether to discard the target data packet is determined.

After receiving the group data packet processing request information transmitted by the NEF network element, the PCF network element may generate a group data packet processing policy rule based on the group data packet processing request information. For example, the group data packet processing policy rule may be a policy and charging control (PCC) rule. The PCC rule carries the data packet association relationship information. Then the PCF network element transmits the PCC rule to an SMF network element, and the SMF network element generates a target data detection rule and a target processing rule for the target service flow according to the PCC rule including the data packet association relationship information.

In this embodiment of the present disclosure, the SMF network element may generate a target service flow template based on the target service flow template information. The PCF network element may obtain the target service flow template information from the group data packet processing request message transmitted by the AF network element, or may obtain the target service flow template information in another manner. This is not limited in the present disclosure.

In this embodiment of the present disclosure, the target service flow template may include one or more of a source IP address, a source port number, a destination IP address, a destination port number, an FQDN, an APP ID, the Internet Protocol (IP), and the like.

In this embodiment of the present disclosure, the target data detection rule may include the target group identifier. The target group identifier may be used for indicating whether a to-be-forwarded data packet belongs to the target group.

In some embodiments, the target data detection rule may also indicate whether the target data detection rule is effective for an uplink service flow, a downlink service flow, or both an uplink service flow and a downlink service flow. That is, the target data detection rule may further include the uplink/downlink effective indication.

For example, in a case that the target service flow template in the target data detection rule includes the FQDN, the uplink/downlink effective indication may be further used for indicating whether the target data detection rule is effective for an uplink service flow, a downlink service flow, or both an uplink service flow and a downlink service flow. For example, assuming that the uplink/downlink effective indication is used for indicating that the target data detection rule is effective only for an uplink service flow, only a target uplink data packet corresponding to the uplink service flow is detected and processed even if it is detected that the target data packet includes the target group identifier.

In this embodiment of the present disclosure, the target processing rule may include the target-group data packet loss threshold. In a case that data packet loss information in the target group exceeds the target-group data packet loss threshold, other unlost target data packets in the target group are discarded.

In this embodiment of the present disclosure, the SMF network element may define different data detection rules, and one or a combination of the data detection rules may be used as the target data detection rule.

In this embodiment of the present disclosure, the SMF network element may reuse a packet detection rule (PDR) as the target data detection rule, that is, add the target group identifier to the PDR. A specific PDR rule to which the target group identifier is to be added and how to add the target group identifier to the PDR rule may be flexibly set. In other embodiments, the SMF network element may alternatively add a new target data detection rule and target processing rule for group data packet processing.

In the data packet transmission method provided in this embodiment of the present disclosure, on the one hand, the AF network element may transmit a request message to the NEF network element, where the request message carries a target-group data packet loss threshold and an AF ID, and target data packet distinguishing information may be obtained based on the AF ID, or the request message directly carries the target data packet distinguishing information; and on the other hand, the NEF network element may further obtain a target group identifier from the AF network element, or the NEF network element determines a target group identifier, so that the NEF network element can transmit the target-group data packet loss threshold, the target data packet distinguishing information, and the target group identifier to the PCF network element. Then the PCF network element transmits the target-group data packet loss threshold, the target data packet distinguishing information, and the target group identifier to the SMF network element, so that the SMF network element can generate a target data detection rule and a target processing rule based on target-group data packet loss threshold, the target data packet distinguishing information, and the target group identifier. Network transmission of a to-be-forwarded data packet such as a media data packet may be optimized by using the generated target data detection rule and target processing rule. In a case that a group of data packets have a dependency relationship, a data packet in the group is lost due to congestion or other causes, and data packet loss information exceeds the target-group data packet loss threshold, decoding of an image or a video corresponding to the group of data packets cannot be completed on a client side or a service server side. In this case, network transmission may be correspondingly optimized. To be specific, other unlost data packets in the target group are discarded.

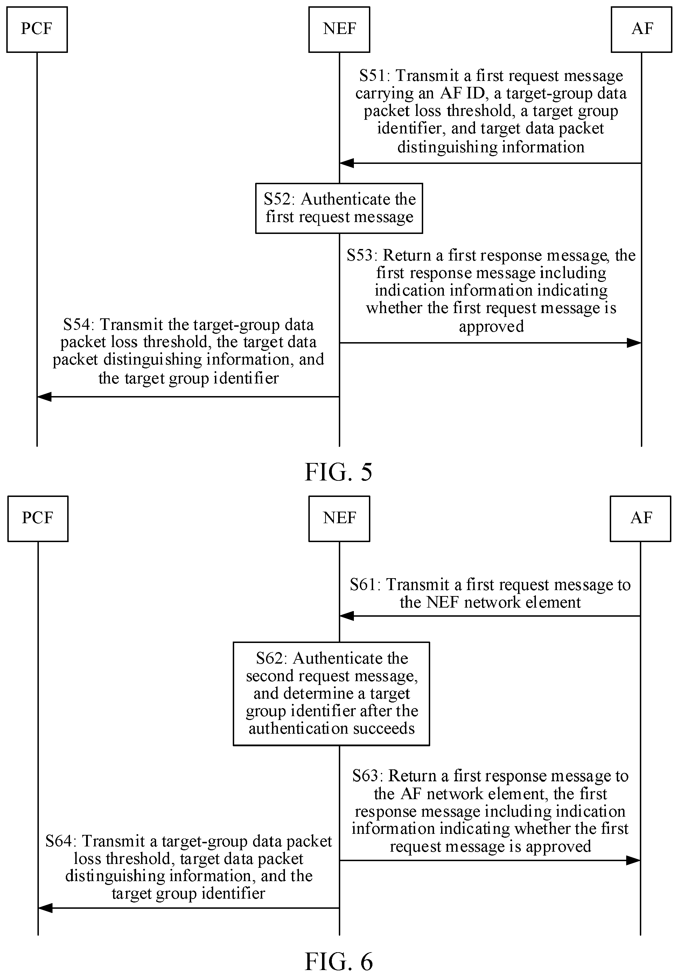

FIG. 5 is a schematic interaction diagram of a data packet transmission method according to another embodiment of the present disclosure.

As shown in FIG. 5, the method provided in this embodiment of the present disclosure may include S51 to S54. Details are described below.

In S51, an AF network element transmits a first request message to an NEF network element. The first request message carries an AF ID, a target-group data packet loss threshold, a target group identifier, and target data packet distinguishing information.

The target data packet distinguishing information may include at least one of target service flow template information, target DNN information, and/or target S-NSSAI information.

In the embodiment of FIG. 5, the first request message transmitted by the AF network element to the NEF network element directly carries at least one of the target service flow template information, the target DNN information, and/or the target S-NSSAI information, and the first request message further carries the target group identifier, to be specific, the AF network element notifies the NEF network element of a group identifier that is the target group identifier to be detected and processed.

In S52, the NEF network element receives the first request message transmitted by the AF network element, and authenticates the first request message.

In S53, the NEF network element returns a first response message to the AF network element. The first response message includes indication information indicating whether the first request message is approved.

In the embodiment of FIG. 5, the first request message transmitted by the AF network element already carries the target group identifier. Therefore, the first response message returned by the NEF network element to the AF network element may not carry the target group identifier.

In S54, the NEF network element directly or indirectly transmits the target data packet distinguishing information, the target-group data packet loss threshold, and the target group identifier to a PCF network element.

For specific content of S54, refer to the foregoing other embodiments.

In the data packet transmission method provided in this embodiment of the present disclosure, on the one hand, the first request message transmitted by the AF network element directly carries at least one of the target service flow template information, the target DNN information, and/or the target S-NSSAI information, so that a quantity of times of interaction between the AF network element and the NEF network element can be reduced; and on the other hand, the first request message transmitted by the AF network element directly carries the target group identifier, so that the NEF network element does not need to specify a target group identifier, and a target service server and/or a target terminal may specify a personalized target group identifier.

FIG. 6 is a schematic interaction diagram of a data packet transmission method according to still another embodiment of the present disclosure.

As shown in FIG. 6, the method provided in this embodiment of the present disclosure may include S61 to S64. Details are described below.

In S61, an AF network element transmits a first request message to an NEF network element.

The first request message carries an AF ID, a target-group data packet loss threshold, and target data packet distinguishing information. The target data packet distinguishing information includes at least one of target service flow template information, target DNN information, and/or target S-NSSAI information. The first request message does not include a target group identifier.

A difference between the embodiment of FIG. 6 and the embodiment of FIG. 5 lies in that the AF network element does not specify a target group identifier in the first request message transmitted to the NEF network element.

In S62, the NEF network element receives the first request message transmitted by the AF network element, and authenticates the first request message.

In the embodiment of FIG. 6, the first request message transmitted by the AF network element does not include a target group identifier. Therefore, after the authentication succeeds, the NEF network element (namely, a network side) may specify a target group identifier.

In S63, the NEF network element returns a first response message to the AF network element. The first response message includes indication information indicating whether the first request message is approved.

In a case that the authentication succeeds, the first response message may further include a target group identifier determined by the NEF network element.

In S64, the NEF network element transmits the target data packet distinguishing information, the target-group data packet loss threshold, and the target group identifier to a PCF network element.

For specific content of S64, refer to the foregoing other embodiments.

In the data packet transmission method provided in this embodiment of the present disclosure, on the one hand, the first request message transmitted by the AF network element directly carries at least one of the target service flow template information, the target DNN information, and/or the target S-NSSAI information, so that a quantity of times of interaction between the AF network element and the NEF network element can be reduced; and on the other hand, the first request message transmitted by the AF network element do not carry a target group identifier, and the NEF network element specifies a target group identifier, to avoid a conflict between target group identifiers configured by different AF network elements.

In this embodiment of the present disclosure, the AF network element may be a functional unit abstracted from a target service server. Therefore, after the AF network element configures or obtains, from the NEF network element, a target group identifier, the target service server can learn of how to package the target group identifier with a target downlink data packet based on the target group identifier.

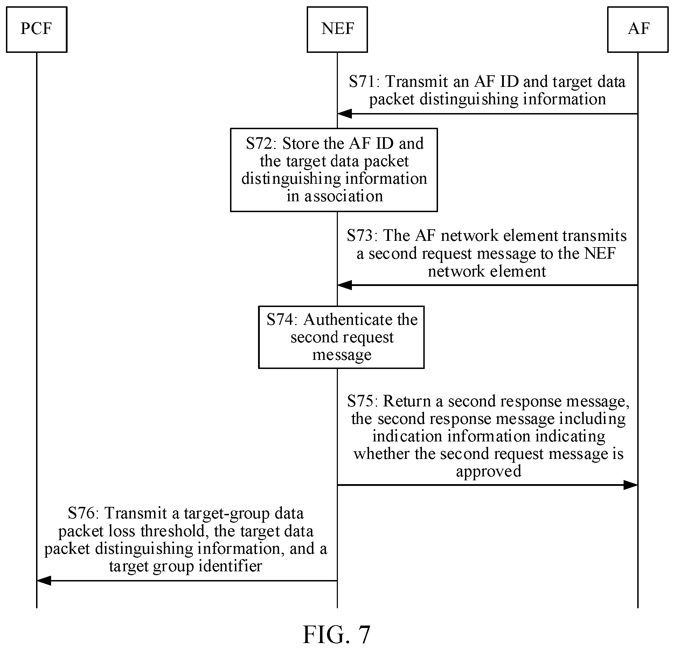

FIG. 7 is a schematic interaction diagram of a data packet transmission method according to yet another embodiment of the present disclosure.

As shown in FIG. 7, the method provided in this embodiment of the present disclosure may include S71 to S76. Details are described below.

In S71, an AF network element transmits an AF ID and target data packet distinguishing information to an NEF network element. The target data packet distinguishing information includes target service flow template information, target DNN information, and/or target S-NSSAI information.

In S72, the NEF network element receives the AF ID and the target data packet distinguishing information transmitted by the AF network element, and stores the AF ID and the target data packet distinguishing information in association.

In S73, the AF network element transmits a second request message to the NEF network element.

The second request message carries the AF ID, a target group identifier, and the target-group data packet loss threshold.

In S74, the NEF network element receives the second request message transmitted by the AF network element, and authenticates the second request message.

After the authentication on the second request message succeeds, the NEF network element may search the associated storage based on the AF ID carried in the second request message to obtain the target service flow template information, the target DNN information, and/or the target S-NSSAI information.

In S75, the NEF network element returns a second response message to the AF network element. The second response message includes indication information indicating whether the second request message is approved.

In S76, the NEF network element directly or indirectly transmits the target data packet distinguishing information, the target-group data packet loss threshold, and the target group identifier to a PCF network element.

In the data packet transmission method provided in this embodiment of the present disclosure, the NEF network element may obtain the target service flow template information, the target DNN information, and/or the target S-NSSAI information from the AF network element in advance, and the NEF network element may store the AF ID in association with the target service flow template information, the target DNN information, and/or the target S-NSSAI information. In this way, when the AF network element transmits the second request message to the NEF network element, the second request message may not include the target service flow template information, the target DNN information and/or the target S-NSSAI information, but only needs to carry the AF ID, the target group identifier, and the target-group data packet loss threshold, to reduce an amount of data carried in the second request message. The target service flow template information, the target DNN information, and/or the target S-NSSAI information may be found from the associated storage based on the AF ID carried in the second request message, and transmitted to the PCF network element to generate a target data detection rule and a target processing rule.

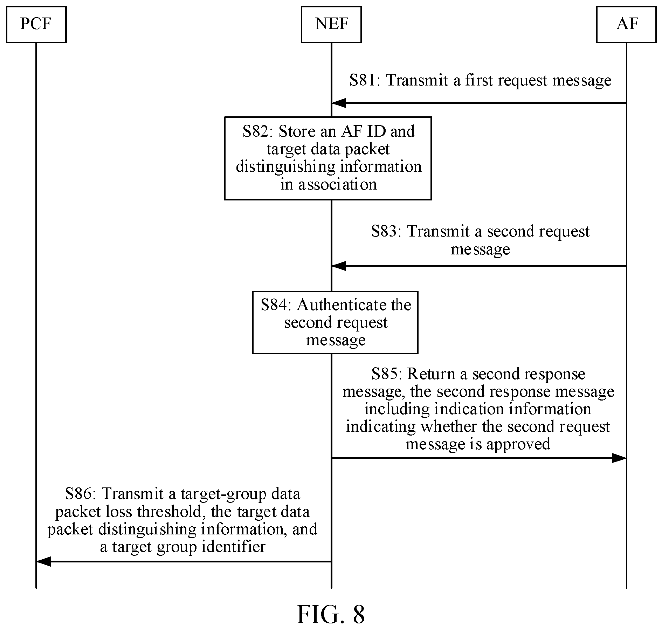

FIG. 8 is a schematic interaction diagram of a data packet transmission method according to yet another embodiment of the present disclosure.

As shown in FIG. 8, the method provided in this embodiment of the present disclosure may include S81 to S86. Details are described below.

In S81, an AF network element transmits a first request message to an NEF network element.

The first request message carries an AF ID and target data packet distinguishing information. The target data packet distinguishing information includes at least one of target service flow template information, target DNN information, and/or target S-NSSAI information. The first request message may not include a target group identifier.

In S82, the NEF network element receives the first request message transmitted by the AF network element, and stores the AF ID and the target data packet distinguishing information in association based on the first request message.

In S83, the AF network element transmits a second request message to the NEF network element. The second request message carries the AF ID, the target-group data packet loss threshold, and the target group identifier.

In S84, the NEF network element receives the second request message transmitted by the AF network element, and authenticates the second request message.

In S85, the NEF network element returns a second response message to the AF network element. The second response message includes indication information indicating whether the second request message is approved.

The second request message carries the target group identifier. Therefore, the second response message herein may not include the target group identifier.

In S86, the NEF network element directly or indirectly transmits the target-group data packet loss threshold, the target data packet distinguishing information, and the target group identifier to a PCF network element.

In the data packet transmission method provided in this embodiment of the present disclosure, the first request message transmitted by the AF network element to the NEF network element in advance may not include a target group identifier, and the target group identifier is carried in the second request message.

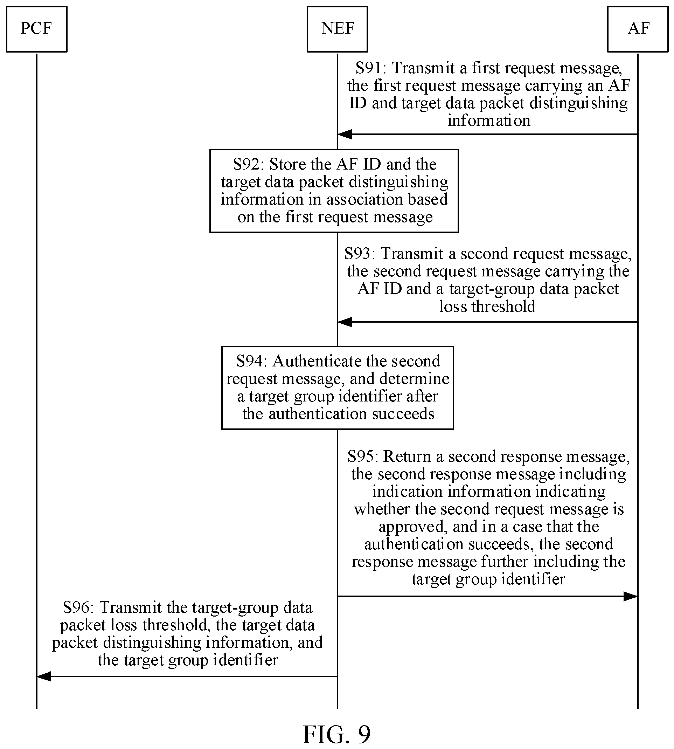

FIG. 9 is a schematic interaction diagram of a data packet transmission method according to yet another embodiment of the present disclosure.

As shown in FIG. 9, the method provided in this embodiment of the present disclosure may include S91 to S96. Details are described below.

In S91, an AF network element transmits a first request message to an NEF network element. The first request message carries an AF ID and target data packet distinguishing information. The target data packet distinguishing information includes at least one of target service flow template information, target DNN information, and/or target S-NSSAI information. The first request message may not include a target group identifier.

In S92, the NEF network element receives the first request message transmitted by the AF network element, and stores the AF ID and the target data packet distinguishing information in association based on the first request message.

In S93, the AF network element transmits a second request message to the NEF network element. The second request message carries the AF ID and the target-group data packet loss threshold.

In S94, the NEF network element receives the second request message transmitted by the AF network element, authenticates the second request message, and determines a target group identifier after the authentication succeeds.

In S95, the NEF network element returns a second response message to the AF network element. The second response message includes indication information indicating whether the second request message is approved.

In the embodiment of FIG. 9, neither the first request message nor the second request message carries a target group identifier. Therefore, in a case that the authentication on the second request message succeeds, the second response message may further include the target group identifier determined by the NEF network element.

In S96, the NEF network element directly or indirectly transmits the target data packet distinguishing information, the target-group data packet loss threshold, and the target group identifier to a PCF network element.

In the data packet transmission method provided in this embodiment of the present disclosure, the first request message and the second request message transmitted by the AF network element to the NEF network element in advance may not include a target group identifier, and the NEF network element specifies a target group identifier, to avoid a conflict between target group identifiers specified by different AFs.

It can be understood that, although an example in which the AF network element and the PCF network element exchange information through the NEF network element is used in the embodiments of FIG. 4 to FIG. 9, the embodiments of the present disclosure are not limited therefore. In other embodiments, the AF network element may alternatively directly communicate with the PCF network element, to be specific, the PCF network element directly obtains data packet association relationship information from the AF network element. The NEF network element may alternatively store information requested by the AF on a UDR network element, and the PCF network element may receive the information from the UDR network element.

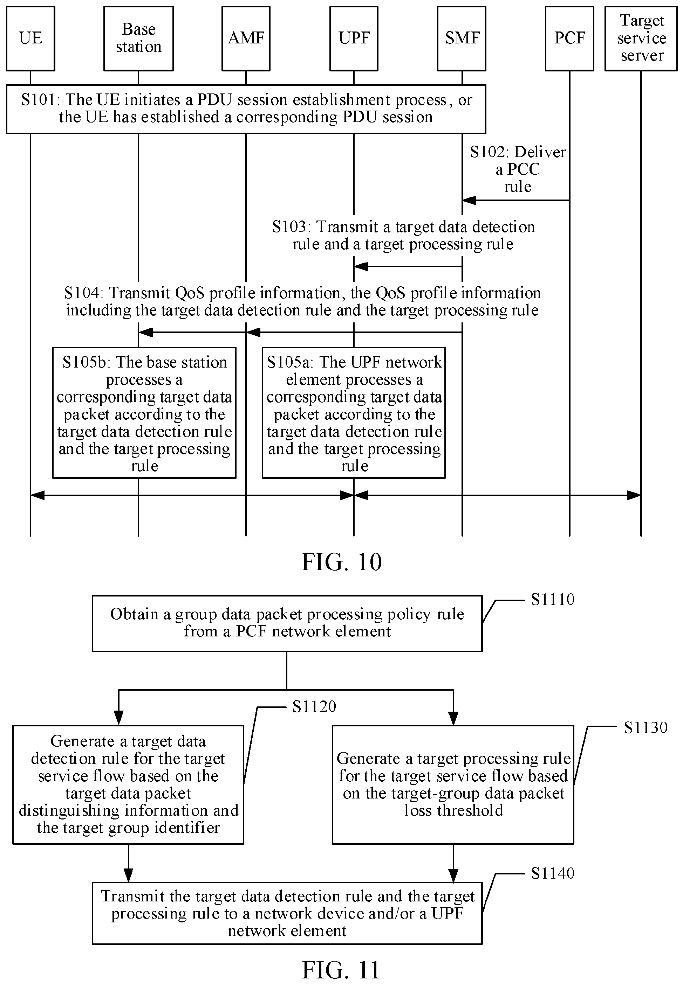

FIG. 10 is a schematic diagram of policy execution on a network side. An example in which UE serves as a target terminal and a base station serves as a network device is used in the embodiment of FIG. 10. As shown in FIG. 10, a method provided in this embodiment of the present disclosure may include the following steps:

In S101, the UE initiates a protocol data unit (PDU) session establishment process, or the UE has established a corresponding PDU session.

In this embodiment of the present disclosure, the UE has established a PDU session for a target service (for example, for a specific target DNN or target S-NSSAI), or the UE initiates PDU session establishment for a target service (for example, for a specific target DNN or target S-NSSAI).

In S102, a PCF network element transmits a PCC rule to an SMF network element.

In S103, the SMF network element receives the PCC rule transmitted by the PCF network element.

A target data detection rule and a target processing rule are generated based on data packet association relationship information carried in the PCC rule, and the target data detection rule and the target processing rule are transmitted to a UPF network element.

In S104, the SMF network element transmits QoS profile information to an AMF network element. The QoS profile information includes the target data detection rule and the target processing rule.

In this embodiment of the present disclosure, the SMF network element transmits the QoS profile information or updated QoS profile information to the AMF network element. The QoS profile information includes the target data detection rule and the target processing rule.

The AMF network element receives the QoS profile information transmitted by the SMF network element, and transmits the QoS profile information to the base station.

The base station receives the QoS profile information transmitted by the AMF network element.

In this embodiment of the present disclosure, the UPF network element and the base station are two points prone to congestion. Therefore, the target data detection rule and the target processing rule may be configured on the UPF network element and the base station to separately detect and process a target uplink data packet transmitted by the UE and a target downlink data packet transmitted by a target service server.

In S105a, the UPF network element processes a corresponding target data packet according to the target data detection rule and the target processing rule.

The UPF network element processes a target service flow according to the target data detection rule and the target processing rule. In the case of detecting that data packet loss information, for example, a quantity of lost packets, of target data packets in the same target group exceeds a target-group data packet loss threshold, other target data packets in the target group are discarded.

In S105b, the base station processes a corresponding target data packet according to the target data detection rule and the target processing rule.

The base station processes a target service flow according to the target data detection rule and the target processing rule. In the case of detecting that data packet loss information, for example, a quantity of lost packets, of target data packets in the same target group exceeds a target-group data packet loss threshold, other target data packets in the target group are discarded.

The same target uplink data packet or downlink data packet may be detected and processed by both the base station and the UPF network element. For example, for a target uplink data packet, a target uplink data packet transmitted by the UE to the base station is first detected by the base station. Assuming that the target-group data packet loss threshold is 50%, in a case that the base station detects that data packet loss information is 30%, the base station continues to normally transmit the target uplink data packet to the UPF network element. Then the UPF network element performs detection. If packet loss occurs again between the base station and the UPF network element and data packet loss information reaches 60%, the UPF network element discards target data packets in the entire target group.

As execution sequence of S102, S103, and S104 in the embodiment of FIG. 10 is not limited, and S102, S103, and S104 may alternatively be performed in parallel. As execution sequence of S105a and S105b is not limited, and S105a and S105b may alternatively be performed in parallel.

In the data packet transmission method provided in this embodiment of the present disclosure, network transmission of a data packet is optimized. In a case that a group of data packets have a dependency relationship, a data packet in the group is lost due to congestion or other causes, and decoding of an image or a video corresponding to the group of data packets cannot be completed on a client side or a service server side due to the loss, network transmission may be correspondingly optimized to reduce data transmission load of the network.

FIG. 11 is a flowchart of a data packet transmission method according to another embodiment of the present disclosure. The method provided in the embodiment of FIG. 11 may be performed by an SMF network element.

As shown in FIG. 11, the method provided in this embodiment of the present disclosure may include S1110 to S1140. Details are described below.

In S1110, a group data packet processing policy rule is obtained from a PCF network element.

The group data packet processing policy rule includes a target group identifier of a target service flow, a target-group data packet loss threshold, and target data packet distinguishing information.

In S1120, a target data detection rule for the target service flow is generated based on the target data packet distinguishing information and the target group identifier.

In S1130, a target processing rule for the target service flow is generated based on the target-group data packet loss threshold.

In S1140, the target data detection rule and the target processing rule are transmitted to a network device and/or a UPF network element.

The target data detection rule may be used for indicating the network device and/or the UPF network element to determine, from a received to-be-forwarded data packet, a target data packet belonging to a target group of the target service flow based on the target data packet distinguishing information and the target group identifier that are included in the target data detection rule.

The target processing rule may be used for indicating the network device and/or the UPF network element to determine that the target group is a target to-be-discarded group based on data packet loss information in the target group and the target-group data packet loss threshold included in the target processing rule.

In an exemplary embodiment, the transmitting the target data detection rule and the target processing rule to a network device may include: transmitting quality of service (QoS) profile information to an AMF network element, the quality of service profile including the target data detection rule and the target processing rule, and the quality of service profile indicating the AMF network element to transmit the quality of service profile to the network device.

For other content of the embodiment of FIG. 11, refer to the foregoing other embodiments.

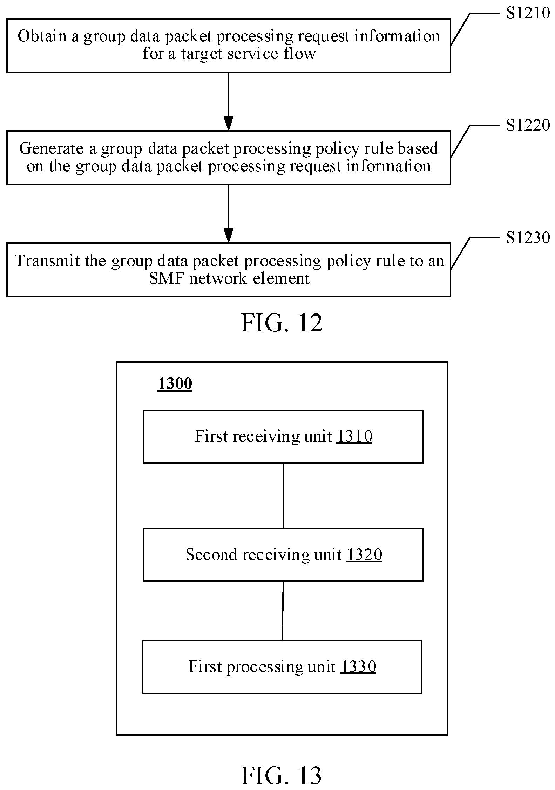

FIG. 12 is a flowchart of a data packet transmission method according to still another embodiment of the present disclosure. The method provided in the embodiment of FIG. 12 may be performed by a PCF network element.

As shown in FIG. 12, the method provided in this embodiment of the present disclosure may include S1210 to S1230. Details are described below.

In S1210, a group data packet processing request information for a target service flow is obtained.

The group data packet processing request information may include a target group identifier, target data packet distinguishing information, and a target-group data packet loss threshold.

In an exemplary embodiment, the PCF network element may obtain the group data packet processing request information for the target service flow from an AF network element, an NEF network element, or a UDR network element.

In S1220, a group data packet processing policy rule, for example, a PCC rule, is generated based on the group data packet processing request information.

In S1230, the group data packet processing policy rule, for example, the PCC rule, that includes the target data packet distinguishing information, the target group identifier, and the target-group data packet loss threshold is transmitted to an SMF network element.

The target data packet distinguishing information and the target group identifier may be used for indicating the SMF network element to generate a target data detection rule for the target service flow and transmit the target data detection rule to a network device and/or a UPF network element.

The target-group data packet loss threshold may be used for indicating the SMF network element to generate a target processing rule for the target service flow and transmit the target processing rule to the network device and/or the UPF network element.

The target data detection rule may be used for indicating the network device and/or the UPF network element to determine, from a received to-be-forwarded data packet, a target data packet belonging to a target group of the target service flow based on the target data packet distinguishing information and the target group identifier that are included in the target data detection rule.

The target processing rule may be used for indicating the network device and/or the UPF network element to determine that the target group is a target to-be-discarded group based on data packet loss information in the target group and the target-group data packet loss threshold included in the target processing rule.

For other content of the embodiment of FIG. 12, refer to the foregoing other embodiments.

An embodiment of the present disclosure provides a data packet transmission method. The method is performed by an AF network element, and the method may include: transmitting group data packet processing request information to a policy control function network element, the group data packet processing request information including a target group identifier, a target-group data packet loss threshold, and target data packet distinguishing information, and the target-group data packet loss threshold, the target group identifier, and the target data packet distinguishing information indicating the policy control function network element to generate a group data packet processing policy rule, for example, a PCC rule, and transmit, to a session management function network element, the group data packet processing policy rule, for example, the PCC rule, that includes the target-group data packet loss threshold, the target group identifier, and the target data packet distinguishing information.

In an exemplary embodiment, the transmitting group data packet processing request information to a policy control function network element may include: transmitting the target data packet distinguishing information and the target data packet loss threshold to a network exposure function network element, the target data packet distinguishing information and the target-group data packet loss threshold indicating the network exposure function network element to transmit the target data packet distinguishing information, the target group identifier, and the target-group data packet loss threshold to the policy control function network element.

In an exemplary embodiment, the transmitting the target data packet distinguishing information and the target data packet loss threshold to a network exposure function network element may include: transmitting a first request message to the network exposure function network element, the first request message including application function identification information, the target-group data packet loss threshold, and the target data packet distinguishing information, and the first request message indicating the network exposure function network element to authenticate the first request message and generate a first response message based on an authentication result; and receiving the first response message returned by the network exposure function network element.

In an exemplary embodiment, the target data packet distinguishing information may include at least one of target service flow template information, target data network name (DNN) information, target single network slice selection assistance information (S-NSSAI), and the like.

In a case that the authentication result indicates that the authentication succeeds and the first request message further includes the target group identifier, the first response message may include indication information indicating that the first request message is approved; or in a case that the authentication result indicates that the authentication succeeds and the first request message does not include the target group identifier, the first response message may include the target group identifier and indication information indicating that the first request message is approved.

The target group identifier may be used for indicating a target service server and/or a target terminal to configure, based on the target group identifier, a target group identifier of a target data packet belonging to a target group of the target service flow.

In an exemplary embodiment, in a case that the target data packet distinguishing information includes the target service flow template information, the target service flow template information may include at least one of a source network address, a source port number, a destination network address, a destination port number, a fully qualified domain name, an application identifier, and the like of the target service flow.

In an exemplary embodiment, the transmitting the target data packet distinguishing information and the target data packet loss threshold to a network exposure function network element may include: transmitting application function identification information and the target data packet distinguishing information to the network exposure function network element, the application function identification information and the target data packet distinguishing information indicating the network exposure function network element to store the application function identification information and the target data packet distinguishing information in association; transmitting a second request message to the network exposure function network element, the second request message including the application function identification information and the target-group data packet loss threshold, and the second request message indicating the network exposure function network element to authenticate the second request message, obtain, through searching, the target data packet distinguishing information based on the AF identification information in the second request message after the authentication on the second request message succeeds, and generate a second response message; and receiving the second response message returned by the network exposure function network element.

In an exemplary embodiment, the target data packet distinguishing information may include at least one of target service flow template information, target data network name (DNN) information, and target single network slice selection assistance information (S-NSSAI). In a case that the authentication result indicates that the authentication succeeds and the second request message further includes the target group identifier, the second response message may include indication information indicating that the second request message is approved; or in a case that the second request message does not include the target group identifier, the second response message may further include the target group identifier.

The target group identifier may be used for indicating a target service server and/or a target terminal to configure, based on the target group identifier, a target group identifier of a target data packet belonging to a target group of the target service flow.

For other content of this embodiment of the present disclosure, refer to the foregoing other embodiments.

An embodiment of the present disclosure provides a data packet transmission method. The method may be performed by a target service server, and the method may include: obtaining a target group identifier; configuring a target group identifier for a target downlink data packet in a target group of a target service flow based on the target group identifier; and transmitting the target downlink data packet including the target group identifier to a user plane function (UPF) network element and/or a network device.

The target downlink data packet may be used for indicating the UPF network element and/or the network device to detect the target downlink data packet based on target data packet distinguishing information and a target group identifier that are included in a target data detection rule, and determine that the target group is a target to-be-discarded group based on a target-group data packet loss threshold included in a target processing rule and data packet loss information in the target group.

For other content of this embodiment of the present disclosure, refer to the foregoing other embodiments.

An embodiment of the present disclosure provides a data packet transmission method. The method may be performed by a target terminal, and the method may include: obtaining a target group identifier; configuring a target group identifier for a target uplink data packet in a target group of a target service flow based on the target group identifier; and transmitting the target uplink data packet including the target group identifier to a network device and/or a UPF network element.

The target uplink data packet may be used for indicating the UPF network element and/or the network device to detect the target uplink data packet based on target data packet distinguishing information and a target group identifier that are included in a target data detection rule, and determine that the target group is a target to-be-discarded group based on a target-group data packet loss threshold included in a target processing rule and data packet loss information in the target group.

In an exemplary embodiment, the obtaining a target group identifier may include: obtaining the target group identifier from an application function (AF) network element.

In an exemplary embodiment, the obtaining a target group identifier may include: receiving a target downlink data packet transmitted by a target service server, the target downlink data packet carrying a target group identifier; and determining the target group identifier based on the target group identifier carried in the target downlink data packet.

In this embodiment of the present disclosure, for an uplink service flow, UE may be notified of the target group identifier in different manners. For example, in a manner, the AF network element or a target service server transmits application layer information to the UE, defines an application layer container, and carries the target group identifier. In another manner, the UE receives a target downlink data packet transmitted by the target service server, and learns, based on a target group identifier of the received downlink data packet, how to add a target group identifier to a target uplink data packet.

An embodiment of the present disclosure provides a communication device that may be implemented by a user plane function network element and/or a network device (for example, a base station). The user plane function network element is used as an example. FIG. 13 is a block diagram of a user plane function network element according to an embodiment of the present disclosure. The UPF network element 1300 may include a first receiving unit 1310, a second receiving unit 1320, and a first processing unit 1330.

The first receiving unit 1310 may be configured to obtain a target data detection rule and a target processing rule for a target service flow.

The second receiving unit 1320 may be configured to receive a to-be-forwarded data packet.

The first processing unit 1330 may be configured to determine, from the to-be-forwarded data packet, a target data packet belonging to a target group of the target service flow based on target data packet distinguishing information and a target group identifier that are included in the target data detection rule.

The first processing unit 1330 may be further configured to determine data packet loss information in the target group.

The first processing unit 1330 may be further configured to determine that the target group is a target to-be-discarded group based on a target-group data packet loss threshold included in the target processing rule and the data packet loss information in the target group.

In an exemplary embodiment, the first receiving unit 1310 may be further configured to: obtain, through a user plane function network element and/or a network device, the target data detection rule and the target processing rule from a session management function network element.

In an exemplary embodiment, the target data detection rule may further include an uplink/downlink effective indication. The first processing unit 1330 may be further configured to: determine, based on the uplink/downlink effective indication through user plane function network element and/or the network device, whether the target data detection rule is effective for an uplink service flow, a downlink service flow, or an uplink/downlink service flow of the target service flow; and in the case of determining that the target data detection rule is effective for a downlink service flow and determining that the target data packet belongs to a downlink service flow of the target service flow, determine whether the target group is a target to-be-discarded group based on the target-group data packet loss threshold and the data packet loss information; in the case of determining that the target data detection rule is effective for an uplink service flow and determining that the target data packet belongs to an uplink service flow of the target service flow, determine whether the target group is a target to-be-discarded group based on the target-group data packet loss threshold and the data packet loss information; or in the case of determining that the target data detection rule is effective for an uplink/downlink service flow, separately detect an uplink service flow and a downlink service flow of the target service flow, and determine whether a target group to which the uplink service flow or the downlink service flow belongs is a target to-be-discarded group based on the target-group data packet loss threshold and the data packet loss information.

In an exemplary embodiment, the first processing unit 1330 may be further configured to discard a remaining target data packet in the target to-be-discarded group.

For other content of the embodiment of FIG. 13, refer to the foregoing other embodiments.

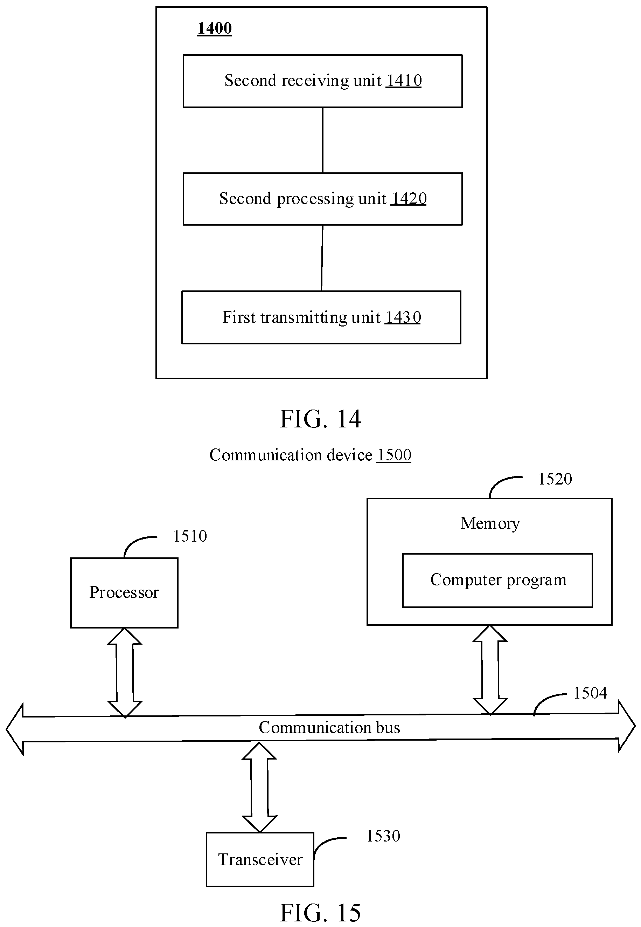

FIG. 14 is a block diagram of an SMF network element according to an embodiment of the present disclosure.

As shown in FIG. 14, this embodiment of the present disclosure provides an SMF network element 1400. The SMF network element 1400 may include a second receiving unit 1410, a second processing unit 1420, and a first transmitting unit 1430.

The second receiving unit 1410 may be configured to obtain a group data packet processing policy rule from a policy control function network element, the group data packet processing policy rule including a target group identifier of a target service flow, a target-group data packet loss threshold, and target data packet distinguishing information.

The second processing unit 1420 may be configured to generate a target data detection rule for the target service flow based on the target group identifier and the target data packet distinguishing information.

The second processing unit 1420 may be further configured to generate a target processing rule for the target service flow based on the target-group data packet loss threshold.

The first transmitting unit 1430 may be configured to transmit the target data detection rule and the target processing rule to a network device and/or a UPF network element.

The target data detection rule may be used for indicating the network device and/or the UPF network element to determine, from a received to-be-forwarded data packet, a target data packet belonging to a target group of the target service flow based on the target group identifier and the target data packet distinguishing information that are included in the target data detection rule.

The target processing rule may be used for indicating the network device and/or the UPF network element to determine that the target group is a target to-be-discarded group based on data packet loss information in the target group and the target-group data packet loss threshold included in the target processing rule.

In an exemplary embodiment, the first transmitting unit 1430 may be further configured to: transmit quality of service profile information to an AMF network element, the quality of service profile including the target data detection rule and the target processing rule. The quality of service profile may be used for indicating the AMF network element to transmit the quality of service profile to the network device.

For other content of the embodiment of FIG. 14, refer to the foregoing other embodiments.

An embodiment of the present disclosure provides a PCF network element. The PCF network element may include: a third receiving unit, configured to obtain group data packet processing request information of a target service flow, the group data packet processing request information including a target group identifier, a target-group data packet loss threshold, and target data packet distinguishing information; a third processing unit, configured to generate a group data packet processing policy rule based on the group data packet processing request information; and a second transmitting unit, configured to transmit, to a session management function network element, the group data packet processing policy rule including the target group identifier, the target-group data packet loss threshold, and the target data packet distinguishing information.

The target group identifier and the target data packet distinguishing information may be used for indicating the session management function network element to generate a target data detection rule for the target service flow based on the target data packet distinguishing information and the target group identifier.

The target-group data packet loss threshold may be used for indicating the session management function network element to generate a target processing rule for the target service flow based on the target-group data packet loss threshold.

For other content of this embodiment of the present disclosure, refer to the foregoing other embodiments.

An embodiment of the present disclosure provides an application function network element. The application function network element may include: a third transmitting unit, configured to transmit group data packet processing request information to a policy control function network element.

The group data packet processing request information may include a target group identifier, a target-group data packet loss threshold, and target data packet distinguishing information.

The target group identifier, the target-group data packet loss threshold, and the target data packet distinguishing information may be used for indicating the policy control function network element to generate a group data packet processing policy rule and transmit, to a session management function network element, the group data packet processing policy rule including the target group identifier, the target-group data packet loss threshold, and the target data packet distinguishing information.

**In** an exemplary embodiment, the third transmitting unit may be further configured to: transmit the target data packet distinguishing information and the target data packet loss threshold to a network exposure function network element.

The target data packet distinguishing information and the target-group data packet loss threshold may be used for indicating the network exposure function network element to transmit the target group identifier, the target data packet distinguishing information, and the target-group data packet loss threshold to the policy control function network element.

In an exemplary embodiment, the third transmitting unit may be further configured to: transmit a first request message to the network exposure function network element. The first request message may include application function identification information, the target-group data packet loss threshold, and the target data packet distinguishing information. The first request message may be used for indicating the network exposure function network element to authenticate the first request message and generate a first response message based on an authentication result. The application function network element may further include a fourth receiving unit, configured to receive the first response message returned by the network exposure function network element.

In an exemplary embodiment, the target data packet distinguishing information may include at least one of target service flow template information, target data network name (DNN) information, target single network slice selection assistance information (S-NSSAI), and the like.

Based on an authentication result, in a case that the authentication result indicates that the authentication succeeds and the first request message further includes the target group identifier, the first response message may include indication information indicating that the first request message is approved; or in a case that the first request message does not include the target group identifier, the first response message may further include the target group identifier. The target group identifier may be used for indicating a target service server and/or a target terminal to configure, based on the target group identifier, a target group identifier of a target data packet belonging to a target group of the target service flow.

In an exemplary embodiment, in a case that the target data packet distinguishing information includes the target service flow template information, the target service flow template information may include at least one of a source network address, a source port number, a destination network address, a destination port number, a fully qualified domain name, an application identifier, and the like of the target service flow.

In an exemplary embodiment, the third transmitting unit may be further configured to: transmit application function identification information and the target data packet distinguishing information to the network exposure function network element. The application function identification information and the target data packet distinguishing information may be used for indicating the network exposure function network element to store the application function identification information and the target data packet distinguishing information in association.

The third transmitting unit may be further configured to: transmit a second request message to the network exposure function network element. The second request message includes the AF identification information and the target-group data packet loss threshold. The second request message may be used for indicating the network exposure function network element to authenticate the second request message, obtain, through searching, the target data packet distinguishing information based on the AF identification information in the second request message after the authentication on the second request message succeeds, and generate a second response message.

The fourth receiving unit may be further configured to: receive the second response message returned by the network exposure function network element.

In an exemplary embodiment, the target data packet distinguishing information includes at least one of target service flow template information, target data network name (DNN) information, and target single network slice selection assistance information (S-NSSAI). In a case that the authentication result indicates that the authentication succeeds and the second request message further includes the target group identifier, the second response message may include indication information indicating that the second request message is approved; or in a case that the second request message does not include the target group identifier, the second response message may further include the target group identifier. The target group identifier may be used for indicating a target service server and/or a target terminal to configure, based on the target group identifier, a target group identifier of a target data packet belonging to a target group of the target service flow.

For other content of this embodiment of the present disclosure, refer to the foregoing other embodiments.

An embodiment of the present disclosure provides a target service server. The target service server may include: a first obtaining unit, configured to obtain a target group identifier; a fourth processing unit, configured to configure a target group identifier for a target downlink data packet in a target group of a target service flow based on the target group identifier; and a fourth transmitting unit, configured to transmit the target downlink data packet including the target group identifier to a UPF network element and/or a network device.

The target downlink data packet may be used for indicating the UPF network element and/or the network device to detect the target downlink data packet based on a target group identifier and target data packet distinguishing information that are included in a target data detection rule, and determine that the target group is a target to-be-discarded group based on a target-group data packet loss threshold included in a target processing rule and data packet loss information in the target group.

For other content of this embodiment of the present disclosure, refer to the foregoing other embodiments.

An embodiment of the present disclosure provides a target terminal. The target terminal may include: a second obtaining unit, configured to obtain a target group identifier; a fifth processing unit, configured to configure a target group identifier for a target uplink data packet in a target group of a target service flow based on the target group identifier; and a fifth transmitting unit, configured to transmit the target uplink data packet including the target group identifier to a UPF network element and/or a network device.

The target uplink data packet may be used for indicating the UPF network element and/or the network device to detect the target uplink data packet based on target data packet distinguishing information and a target group identifier that are included in a target data detection rule, and determine that the target group is a target to-be-discarded group based on a target-group data packet loss threshold included in a target processing rule and data packet loss information in the target group.

In an exemplary embodiment, the obtaining unit may be further configured to: obtain the target group identifier from an application function (AF) network element.

In an exemplary embodiment, the obtaining unit may be further configured to: receive a target downlink data packet transmitted by a target service server, the target downlink data packet carrying a target group identifier; and determine the target group identifier based on the target group identifier.

For other content of this embodiment of the present disclosure, refer to the foregoing other embodiments.

FIG. 15 is a schematic structural diagram of a communication device 1500 according to an embodiment of the present disclosure. The communication device may be a terminal such as UE, a network device such as a base station, or a PCF network element and/or an NEF network element and/or an AF network element and/or an AMF network element and/or an SMF network element and/or a UPF network element. The communication device 1500 shown in FIG. 15 includes a processor 1510. The processor 1510 may invoke a computer program from a memory and run the computer program to implement the methods in the embodiments of the present disclosure.

In some embodiments, as shown in FIG. 15, the communication device 1500 may further include a memory 1520. The processor 1510 may invoke a computer program from the memory 1520 and run the computer program to implement the methods in the embodiments of the present disclosure.

The memory 1520 may be a separate device independent of the processor 1510, or may be integrated in the processor 1510.

In some embodiments, as shown in FIG. 15, the communication device 1500 may further include a transceiver 1530. The processor 1510 may control the transceiver 1530 to communicate with another device, specifically, to transmit information or data to another device, or receive information or data transmitted by another device.

The transceiver 1530 may include a transmitter and a receiver. The transceiver 1530 may further include an antenna. There may be one or more antennas.

In some embodiments, the communication device 1500 may be specifically any network element in the embodiments of the present disclosure, and the communication device 1500 may implement corresponding processes implemented by any network element in the methods in the embodiments of the present disclosure. For brevity, details are not described herein again.

In some embodiments, the communication device 1500 may be specifically the network device in the embodiments of the present disclosure, and the communication device 1500 may implement corresponding processes implemented by the network device in the methods in the embodiments of the present disclosure. For brevity, details are not described herein again.

In some embodiments, the communication device 1500 may be specifically the mobile terminal or the terminal in the embodiments of the present disclosure, and the communication device 1500 may implement corresponding processes implemented by the mobile terminal or the terminal in the methods in the embodiments of the present disclosure. For brevity, details are not described herein again.

It is to be understood that the processor in the embodiments of the present disclosure may be an integrated circuit chip with a signal processing capability. During implementation, the steps in the foregoing method embodiments may be performed by an integrated logic circuit of hardware in a processor or through instructions in a form of software.

The processor may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or execute the methods, steps, and logical block diagrams disclosed in the embodiments of the present disclosure. The general-purpose processor may be a microprocessor, or the processor may be any conventional processor or the like. The steps of the methods disclosed with reference to the embodiments of the present disclosure may be directly implemented by a hardware decoding processor, or may be implemented by a combination of hardware and software modules in a decoding processor. The software module may be located in a storage medium mature in the art, such as a random access memory, a flash memory, a read-only memory, a programmable read-only memory or electrically erasable programmable memory, or a register. The storage medium is located in the memory. The processor reads information in the memory and completes the steps of the methods in combination with hardware thereof.

It can be understood that the memory in the embodiments of the present disclosure may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), and serves as an external cache. By way of example but not limitative description, RAMs in many forms may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). The memory in the system and the method described in this specification includes but is not limited to these memories and any memory of another proper type. The foregoing memories are exemplary but not limitative description.

A not claimed embodiment of the present disclosure further provides a computer-readable storage medium, configured to store a computer program.

In some embodiments, the computer-readable storage medium may be applied to the network device in the embodiments of the present disclosure, and the computer program enables a computer to perform corresponding processes implemented by the network device in the methods in the embodiments of the present disclosure. For brevity, details are not described herein again.

In some embodiments, the computer-readable storage medium may be applied to any network element in the embodiments of the present disclosure, and the computer program enables a computer to perform corresponding processes implemented by any network element in the methods in the embodiments of the present disclosure. For brevity, details are not described herein again.

In some embodiments, the computer-readable storage medium may be applied to the mobile terminal or the terminal in the embodiments of the present disclosure, and the computer program enables a computer to perform corresponding processes implemented by the mobile terminal or the terminal in the methods in the embodiments of the present disclosure. For brevity, details are not described herein again.

Another not claimed embodiment of the present disclosure further provides a computer program product, including computer program instructions.

In some embodiments, the computer program product may be applied to the network device in the embodiments of the present disclosure, and the computer program instructions enable a computer to perform corresponding processes implemented by the network device in the methods in the embodiments of the present disclosure. For brevity, details are not described herein again.

In some embodiments, the computer program product may be applied to any network element in the embodiments of the present disclosure, and the computer program instructions enable a computer to perform corresponding processes implemented by any network element in the methods in the embodiments of the present disclosure. For brevity, details are not described herein again.

In some embodiments, the computer program product may be applied to the mobile terminal or the terminal in the embodiments of the present disclosure, and the computer instructions enable a computer to perform corresponding processes implemented by the mobile terminal or the terminal in the methods in the embodiments of the present disclosure. For brevity, details are not described herein again.

Another not claimed embodiment of the present disclosure further provides a computer program.

In some embodiments, the computer program may be applied to the network device in the embodiments of the present disclosure, and when the computer program runs on a computer, the computer is enabled to perform corresponding processes implemented by the network device in the methods in the embodiments of the present disclosure. For brevity, details are not described herein again.

In some embodiments, the computer program may be applied to any network element in the embodiments of the present disclosure, and when the computer program runs on a computer, the computer is enabled to perform corresponding processes implemented by any network element in the methods in the embodiments of the present disclosure. For brevity, details are not described herein again.

In some embodiments, the computer program may be applied to the mobile terminal or the terminal in the embodiments of the present disclosure, and when the computer program runs on a computer, the computer is enabled to perform corresponding processes implemented by the mobile terminal or the terminal in the methods in the embodiments of the present disclosure. For brevity, details are not described herein again.

A person of ordinary skill in the art may notice that the exemplary units and algorithm steps described with reference to the embodiments disclosed in this specification can be implemented in electronic hardware, or a combination of computer software and electronic hardware. Whether the functions are performed by hardware or software depends on particular applications and design constraints of technical solutions. A person skilled in the art may use different methods to implement the described functions for each particular application, but it is not to be considered that the implementation goes beyond the scope of the present disclosure.

A person skilled in the art may clearly understand that, for simple and clear description, for specific work processes of the foregoing described system, apparatus, and unit, reference may be made to corresponding process in the foregoing method embodiments, and details are not described herein again.

In the several embodiments provided in the present disclosure, the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed.

The units described as separate parts may or may not be physically separate, and parts shown as units may or may not be physical units, that is, may be located in one place, or may be distributed on a plurality of network units. Some or all of the units may be selected according to actual requirements to achieve the objectives of the solutions of the embodiments.

In addition, functional units in the embodiments of the present disclosure may be integrated into one processing unit, or each of the units may exist alone physically, or two or more units may be integrated into one unit.If implemented in the form of software functional units and sold or used as an independent product, the functions may be stored in a computer-readable storage medium. Based on such an understanding, the technical solutions of the present disclosure essentially, or the part contributing to the related art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present disclosure. The foregoing storage medium includes any medium that can store program code, for example, a USB flash drive, a removable hard disk, a read-only memory (ROM), a random access memory (RAM), a magnetic disk, or an optical disc.

The foregoing descriptions are merely specific implementations of the present disclosure, but are not intended to limit the protection scope of the present disclosure, which is subject to the protection scope of the claims.

## Claims

1. A data packet transmission optimization method, the method being performed by a network device comprising:
obtaining (S310) by the network device a target data detection rule and a target processing rule for a target service flow;
receiving (S320) a to-be-forwarded data packet;
determining (S330), from the to-be-forwarded data packet, a target data packet belonging to a target group of the target service flow based on target data packet distinguishing information and a target group identifier that are comprised in the target data detection rule;
determining (S340) data packet loss information of the target data packet in the target group; and
determining (S350) that the target group is a target to-be-discarded group based on the data packet loss information in the target group and a target-group data packet loss threshold comprised in the target processing rule;
transmission of the to-be-forwarded data packet is stopped when it is determined that the target data packet belongs to the target to-be-discarded group.

2. The method according to claim 1, wherein the obtaining (S310) the target data detection rule and the target processing rule for the target service flow comprises: obtaining, by a user plane function network element and/or the network device, the target data detection rule and the target processing rule from a session management function network element.

3. The method according to claim 1 or 2, wherein the target data detection rule further comprises an uplink/downlink effective indication; and
the determining that the target group is the target to-be-discarded group based on the data packet loss information in the target group and the target-group data packet loss threshold comprised in the target processing rule comprises:
in a case that the user plane function network element and/or the network device determine, based on the uplink/downlink effective indication, that the target data detection rule is effective for a downlink service flow and determine that the target data packet belongs to a downlink service flow of the target service flow, determining whether the target group is the target to-be-discarded group based on the target-group data packet loss threshold and the data packet loss information;
in a case that the user plane function network element and/or the network device determine, based on the uplink/downlink effective indication, that the target data detection rule is effective for an uplink service flow and determine that the target data packet belongs to an uplink service flow of the target service flow, determining whether the target group is the target to-be-discarded group based on the target-group data packet loss threshold and the data packet loss information; or
in a case that the user plane function network element and/or the network device determine, based on the uplink/downlink effective indication, that the target data detection rule is effective for an uplink/downlink service flow, separately detecting an uplink service flow and a downlink service flow of the target service flow, and determining whether the target group to which the uplink service flow or the downlink service flow belongs is the target to-be-discarded group based on the target-group data packet loss threshold and the data packet loss information.

4. The method according to claim 1, further comprising:
discarding a remaining target data packet in the target to-be-discarded group.

5. A data packet transmission method, the method being performed by a session management function network element, the method comprising:
obtaining (S1110) a group data packet processing policy rule from a policy control function network element, the group data packet processing policy rule comprising a target group identifier of a target service flow, a target-group data packet loss threshold, and target data packet distinguishing information;
generating (S1120) a target data detection rule for the target service flow based on the target data packet distinguishing information and the target group identifier;
generating (S1130) a target processing rule for the target service flow based on the target-group data packet loss threshold; and
transmitting (S1140) the target data detection rule and the target processing rule to a network device and/or a user plane function network element,
the target data detection rule indicating to the network device and/or the user plane function network element to determine, from a received to-be-forwarded data packet, a target data packet belonging to a target group of the target service flow based on the target data packet distinguishing information and the target group identifier that are comprised in the target data detection rule; and
the target processing rule indicating to the network device and/or the user plane function network element to determine that the target group is a target to-be-discarded group based on data packet loss information in the target group and the target-group data packet loss threshold comprised in the target processing rule.

6. A data packet transmission method, the method being performed by a policy control function network element, the method comprising:
obtaining (S1210) by the policy control function network element group data packet processing request information of a target service flow from an application function network element, the group data packet processing request information comprising a target group identifier, a target-group data packet loss threshold, and target data packet distinguishing information;
generating (S1220) a group data packet processing policy rule based on the group data packet processing request information; and
transmitting (S1230) the group data packet processing policy rule to a session management function network element,
wherein the policy rule indicates to the session management function network element to generate a target data detection rule for the target service flow based on the target data packet distinguishing information and the target group identifier; and
the policy rule indicates to the session management function network element to generate a target processing rule for the target service flow based on the target-group data packet loss threshold, wherein the processing rule indicates to a network device and/or user plane function network element to determine that a target group is a to-be-discarded target group.

7. A data packet transmission method, the method being performed by an application function network element, the method comprising:
transmitting by the application function network element group data packet processing request information of a target service flow to a policy control function network element,
the group data packet processing request information comprising a target group identifier, a target-group data packet loss threshold, and target data packet distinguishing information; and
wherein the request information indicates to the policy control function network element to generate a group data packet processing policy rule and transmit the group data packet processing policy rule to a session management function network element, the group data packet processing policy rule indicating to the session management function network element, SMF, to generate a target processing rule and wherein the target processing rule indicates to a network device and/or user plane function network element to determine that a target group is a to-be-discarded group based on the target-group data packet loss threshold.

8. The method according to claim 7, wherein
the transmitting the group data packet processing request information to the policy control function network element comprises:
transmitting the target-group data packet loss threshold and the target data packet distinguishing information to a network exposure function network element, and
the target-group data packet loss threshold and the target data packet distinguishing information indicate to the network exposure function network element to transmit the target data packet distinguishing information, the target group identifier, and the target-group data packet loss threshold to the policy control function network element.

9. The method according to claim 8, wherein the transmitting the target-group data packet loss threshold and the target data packet distinguishing information to the network exposure function network element comprises:
transmitting a first request message to the network exposure function network element, the first request message comprising application function identification information, the target-group data packet loss threshold, and the target data packet distinguishing information, and the first request message indicating to the network exposure function network element to authenticate the first request message and generate a first response message based on an authentication result; and
receiving the first response message returned by the network exposure function network element.

10. The method according to claim 9, wherein the target data packet distinguishing information comprises at least one of target service flow template information, target data network name,DNN, information, and target single network slice selection assistance information, S-NSSAI; and
in a case that the authentication result indicates that the authentication succeeds and the first request message further comprises the target group identifier, the first response message comprises indication information indicating that the first request message is approved; or in a case that the first request message does not comprise the target group identifier, the first response message further comprises the target group identifier,
the target group identifier indicates a target service server and/or a target terminal to configure, based on the target group identifier, a target group identifier of a target data packet belonging to a target group of the target service flow.

11. The method according to claim 8, wherein the transmitting the target-group data packet loss threshold and the target data packet distinguishing information to the network exposure function network element comprises:
transmitting application function identification information and the target data packet distinguishing information to the network exposure function network element, the application function identification information and the target data packet distinguishing information indicating to the network exposure function network element to store the application function identification information and the target data packet distinguishing information in association;
transmitting a second request message to the network exposure function network element, the second request message comprising the application function identification information and the target-group data packet loss threshold, and the second request message indicating to the network exposure function network element to authenticate the second request message, obtain, through searching, the target data packet distinguishing information based on the application function identification information in the second request message after the authentication on the second request message succeeds, and generate a second response message; and
receiving the second response message from the network exposure function network element.

12. The method according to claim 11, wherein the target data packet distinguishing information comprises at least one of target service flow template information, target data network name,DNN, information, and target single network slice selection assistance information, S-NSSAI, and
in a case that the authentication result indicates that the authentication succeeds and the second request message further comprises the target group identifier, the second response message comprises indication information indicating that the second request message is approved; or in a case that the second request message does not comprise the target group identifier, the second response message further comprises the target group identifier,
the target group identifier indicating a target service server and/or a target terminal to configure, based on the target group identifier, a target group identifier of a target data packet belonging to a target group of the target service flow.

13. A communication device, comprising:
one or more processors; and
a memory, configured to store one or more programs, when the one or more programs are executed by the one or more processors, the communication device being enabled to implement the method according to any one of claims 1 to 4; or
the method according to claim 5; or
the method according to claim 6; or
the method according to any one of claims 7 to 12.

## Patentansprüche

1. Ein Datensendeoptimierungsverfahren für Datenpakete, wobei das Verfahren von einer Netzwerkeinrichtung durchgeführt wird, indem es umfasst:
Erhalten (S310) durch die Netzwerkeinrichtung einer Ziel-Datenerkennungsregel und einer Zielverarbeitungsregel für einen Ziel-Dienstfluss;
Empfangen (S320) eines weiterzuleitenden Datenpakets;
Bestimmen (S330), aus dem weiterzuleitenden Datenpaket, eines Ziel-Datenpakets, das zu einer Zielgruppe des Ziel-Dienstflusses gehört, basierend auf Ziel-Datenpaket-Unterscheidungsinformationen und einem Zielgruppenkennzeichner, die in der Ziel-Datenerkennungsregel umfasst sind;
Bestimmen (S340) von Datenpaketverlustinformationen des Ziel-Datenpakets in der Zielgruppe; und
Bestimmen (S350), dass die Zielgruppe eine Ziel-zu-verwerfende Gruppe ist, basierend auf den Datenpaketverlustinformationen in der Zielgruppe und einem Zielgruppen-Datenpaketverlustschwellenwert, der in der Zielverarbeitungsregel umfasst ist;
das Senden des weiterzuleitenden Datenpakets wird gestoppt, wenn bestimmt wird, dass das Ziel-Datenpaket zu der Ziel-zu-verwerfenden Gruppe gehört.

2. Das Verfahren nach Anspruch 1, wobei das Erhalten (S310) der Ziel-Datenerkennungsregel und der Zielverarbeitungsregel für den Ziel-Dienstfluss umfasst:
Erhalten, durch ein User-Plane-Function-Netzelement und/oder die Netzwerkeinrichtung, der Ziel-Datenerkennungsregel und der Zielverarbeitungsregel von einem Session-Management-Function-Netzelement.

3. Das Verfahren nach Anspruch 1 oder 2, wobei die Ziel-Datenerkennungsregel ferner eine Uplink/Downlink-Wirksamkeitsanzeige umfasst; und
das Bestimmen, dass die Zielgruppe die Ziel-zu-verwerfende Gruppe ist, basierend auf den Datenpaketverlustinformationen in der Zielgruppe und dem Zielgruppen-Datenpaketverlustschwellenwert, der in der Zielverarbeitungsregel umfasst ist, umfasst:
in einem Fall, dass das User-Plane-Function-Netzelement und/oder die Netzwerkeinrichtung basierend auf der Uplink/Downlink-Wirksamkeitsanzeige bestimmen, dass die Ziel-Datenerkennungsregel für einen Downlink-Dienstfluss wirksam ist, und bestimmen, dass das Ziel-Datenpaket zu einem Downlink-Dienstfluss des Ziel-Dienstflusses gehört, Bestimmen, ob die Zielgruppe die Ziel-zu-verwerfende Gruppe ist, basierend auf dem Zielgruppen-Datenpaketverlustschwellenwert und den Datenpaketverlustinformationen;
in einem Fall, dass das User-Plane-Function-Netzelement und/oder die Netzwerkeinrichtung basierend auf der Uplink/Downlink-Wirksamkeitsanzeige bestimmen, dass die Ziel-Datenerkennungsregel für einen Uplink-Dienstfluss wirksam ist, und bestimmen, dass das Ziel-Datenpaket zu einem Uplink-Dienstfluss des Ziel-Dienstflusses gehört, Bestimmen, ob die Zielgruppe die Ziel-zu-verwerfende Gruppe ist, basierend auf dem Zielgruppen-Datenpaketverlustschwellenwert und den Datenpaketverlustinformationen; oder
in einem Fall, dass das User-Plane-Function-Netzelement und/oder die Netzwerkeinrichtung basierend auf der Uplink/Downlink-Wirksamkeitsanzeige bestimmen, dass die Ziel-Datenerkennungsregel für einen Uplink/Downlink-Dienstfluss wirksam ist, getrenntes Erkennen eines Uplink-Dienstflusses und eines Downlink-Dienstflusses des Ziel-Dienstflusses, und Bestimmen, ob die Zielgruppe, zu der der Uplink-Dienstfluss oder der Downlink-Dienstfluss gehört, die Ziel-zu-verwerfende Gruppe ist, basierend auf dem Zielgruppen-Datenpaketverlustschwellenwert und den Datenpaketverlustinformationen.

4. Das Verfahren nach Anspruch 1, ferner umfassend:
Verwerfen eines verbleibenden Ziel-Datenpakets in der Ziel-zu-verwerfenden Gruppe.

5. Ein Datensendeverfahren für Datenpakete, wobei das Verfahren von einem Session-Management-Function-Netzelement durchgeführt wird, wobei das Verfahren umfasst:
Erhalten (S1110) einer Gruppen-Datenpaketverarbeitungs-Policy-Regel von einem Policy-Control-Function-Netzelement, wobei die Gruppen-Datenpaketverarbeitungs-Policy-Regel einen Zielgruppenkennzeichner eines Ziel-Dienstflusses, einen Zielgruppen-Datenpaketverlustschwellenwert und Ziel-Datenpaket-Unterscheidungsinformationen umfasst;
Erzeugen (S1120) einer Ziel-Datenerkennungsregel für den Ziel-Dienstfluss basierend auf den Ziel-Datenpaket-Unterscheidungsinformationen und dem Zielgruppenkennzeichner;
Erzeugen (S1130) einer Zielverarbeitungsregel für den Ziel-Dienstfluss basierend auf dem Zielgruppen-Datenpaketverlustschwellenwert; und
Senden (S1140) der Ziel-Datenerkennungsregel und der Zielverarbeitungsregel an eine Netzwerkeinrichtung und/oder ein User-Plane-Function-Netzelement,
wobei die Ziel-Datenerkennungsregel der Netzwerkeinrichtung und/oder dem User-Plane-Function-Netzelement anzeigt, aus einem empfangenen weiterzuleitenden Datenpaket ein Ziel-Datenpaket zu bestimmen, das zu einer Zielgruppe des Ziel-Dienstflusses gehört, basierend auf den Ziel-Datenpaket-Unterscheidungsinformationen und dem Zielgruppenkennzeichner, die in der Ziel-Datenerkennungsregel umfasst sind; und
wobei die Zielverarbeitungsregel der Netzwerkeinrichtung und/oder dem User-Plane-Function-Netzelement anzeigt, zu bestimmen, dass die Zielgruppe eine Ziel-zu-verwerfende Gruppe ist, basierend auf Datenpaketverlustinformationen in der Zielgruppe und dem Zielgruppen-Datenpaketverlustschwellenwert, der in der Zielverarbeitungsregel umfasst ist.

6. Ein Datensendeverfahren für Datenpakete, wobei das Verfahren von einem Policy-Control-Function-Netzelement durchgeführt wird, wobei das Verfahren umfasst:
Erhalten (S1210) durch das Policy-Control-Function-Netzelement von Gruppen-Datenpaketverarbeitungsanforderungsinformationen eines Ziel-Dienstflusses von einem Application-Function-Netzelement, wobei die Gruppen-Datenpaketverarbeitungsanforderungsinformationen einen Zielgruppenkennzeichner, einen Zielgruppen-Datenpaketverlustschwellenwert und Ziel-Datenpaket-Unterscheidungsinformationen umfassen;
Erzeugen (S1220) einer Gruppen-Datenpaketverarbeitungs-Policy-Regel basierend auf den Gruppen-Datenpaketverarbeitungsanforderungsinformationen; und
Senden (S1230) der Gruppen-Datenpaketverarbeitungs-Policy-Regel an ein Session-Management-Function-Netzelement,
wobei die Policy-Regel dem Session-Management-Function-Netzelement anzeigt, eine Ziel-Datenerkennungsregel für den Ziel-Dienstfluss basierend auf den Ziel-Datenpaket-Unterscheidungsinformationen und dem Zielgruppenkennzeichner zu erzeugen; und
wobei die Policy-Regel dem Session-Management-Function-Netzelement anzeigt, eine Zielverarbeitungsregel für den Ziel-Dienstfluss basierend auf dem Zielgruppen-Datenpaketverlustschwellenwert zu erzeugen, wobei die Verarbeitungsregel einer Netzwerkeinrichtung und/oder einem User-Plane-Function-Netzelement anzeigt, zu bestimmen, dass eine Zielgruppe eine zu-verwerfende Zielgruppe ist.

7. Ein Datensendeverfahren für Datenpakete, wobei das Verfahren von einem Application-Function-Netzelement durchgeführt wird, wobei das Verfahren umfasst:
Senden durch das Application-Function-Netzelement von Gruppen-Datenpaketverarbeitungsanforderungsinformationen eines Ziel-Dienstflusses an ein Policy-Control-Function-Netzelement,
wobei die Gruppen-Datenpaketverarbeitungsanforderungsinformationen einen Zielgruppenkennzeichner, einen Zielgruppen-Datenpaketverlustschwellenwert und Ziel-Datenpaket-Unterscheidungsinformationen umfassen; und
wobei die Anforderungsinformationen dem Policy-Control-Function-Netzelement anzeigt, eine Gruppen-Datenpaketverarbeitungs-Policy-Regel zu erzeugen und die Gruppen-Datenpaketverarbeitungs-Policy-Regel an ein Session-Management-Function-Netzelement zu senden, wobei die Gruppen-Datenpaketverarbeitungs-Policy-Regel dem Session-Management-Function-Netzelement, SMF, anzeigt, eine Zielverarbeitungsregel zu erzeugen, und wobei die Zielverarbeitungsregel einer Netzwerkeinrichtung und/oder einem User-Plane-Function-Netzelement anzeigt, zu bestimmen, dass eine Zielgruppe eine zu-verwerfende Gruppe ist, basierend auf dem Zielgruppen-Datenpaketverlustschwellenwert.

8. Das Verfahren nach Anspruch 7, wobei
das Senden der Gruppen-Datenpaketverarbeitungsanforderungsinformationen an das Policy-Control-Function-Netzelement umfasst:
Senden des Zielgruppen-Datenpaketverlustschwellenwerts und der Ziel-Datenpaket-Unterscheidungsinformationen an ein Network-Exposure-Function-Netzelement, und
wobei der Zielgruppen-Datenpaketverlustschwellenwert und die Ziel-Datenpaket-Unterscheidungsinformationen dem Network-Exposure-Function-Netzelement anzeigt, die Ziel-Datenpaket-Unterscheidungsinformationen, den Zielgruppenkennzeichner und den Zielgruppen-Datenpaketverlustschwellenwert an das Policy-Control-Function-Netzelement zu senden.

9. Das Verfahren nach Anspruch 8, wobei das Senden des Zielgruppen-Datenpaketverlustschwellenwerts und der Ziel-Datenpaket-Unterscheidungsinformationen an das Network-Exposure-Function-Netzelement umfasst:
Senden einer ersten Anforderungsnachricht an das Network-Exposure-Function-Netzelement, wobei die erste Anforderungsnachricht Application-Function-Identifikationsinformationen, den Zielgruppen-Datenpaketverlustschwellenwert und die Ziel-Datenpaket-Unterscheidungsinformationen umfasst, und wobei die erste Anforderungsnachricht dem Network-Exposure-Function-Netzelement anzeigt, die erste Anforderungsnachricht zu authentifizieren und eine erste Antwortnachricht basierend auf einem Authentifizierungsergebnis zu erzeugen; und
Empfangen der ersten Antwortnachricht, die durch das Network-Exposure-Function-Netzelement zurückgegeben wird.

10. Das Verfahren nach Anspruch 9, wobei die Ziel-Datenpaket-Unterscheidungsinformationen mindestens eines von Ziel-Dienstflussvorlageninformationen, Ziel-Datennetzname, DNN, Informationen und Ziel-Single-Network-Slice-Selection-Assistance-Information, S-NSSAI, umfassen; und
in einem Fall, dass das Authentifizierungsergebnis anzeigt, dass die Authentifizierung erfolgreich ist, und die erste Anforderungsnachricht ferner den Zielgruppenkennzeichner umfasst, umfasst die erste Antwortnachricht Hinweisinformationen, die anzeigen, dass die erste Anforderungsnachricht genehmigt ist; oder in einem Fall, dass die erste Anforderungsnachricht den Zielgruppenkennzeichner nicht umfasst, umfasst die erste Antwortnachricht ferner den Zielgruppenkennzeichner,
wobei der Zielgruppenkennzeichner einen Ziel-Dienstserver und/oder ein Zielterminal anzeigt, basierend auf dem Zielgruppenkennzeichner einen Zielgruppenkennzeichner eines Ziel-Datenpakets zu konfigurieren, das zu einer Zielgruppe des Ziel-Dienstflusses gehört.

11. Das Verfahren nach Anspruch 8, wobei das Senden des Zielgruppen-Datenpaketverlustschwellenwerts und der Ziel-Datenpaket-Unterscheidungsinformationen an das Network-Exposure-Function-Netzelement umfasst:
Senden von Application-Function-Identifikationsinformationen und den Ziel-Datenpaket-Unterscheidungsinformationen an das Network-Exposure-Function-Netzelement, wobei die Application-Function-Identifikationsinformationen und die Ziel-Datenpaket-Unterscheidungsinformationen dem Network-Exposure-Function-Netzelement anzeigt, die Application-Function-Identifikationsinformationen und die Ziel-Datenpaket-Unterscheidungsinformationen in Zuordnung zu speichern;
Senden einer zweiten Anforderungsnachricht an das Network-Exposure-Function-Netzelement, wobei die zweite Anforderungsnachricht die Application-Function-Identifikationsinformationen und den Zielgruppen-Datenpaketverlustschwellenwert umfasst, und wobei die zweite Anforderungsnachricht dem Network-Exposure-Function-Netzelement anzeigt, die zweite Anforderungsnachricht zu authentifizieren, nach erfolgreicher Authentifizierung der zweiten Anforderungsnachricht durch Suchen die Ziel-Datenpaket-Unterscheidungsinformationen basierend auf den Application-Function-Identifikationsinformationen in der zweiten Anforderungsnachricht zu erhalten, und eine zweite Antwortnachricht zu erzeugen; und
Empfangen der zweiten Antwortnachricht von dem Network-Exposure-Function-Netzelement.

12. Das Verfahren nach Anspruch 11, wobei die Ziel-Datenpaket-Unterscheidungsinformationen mindestens eines von Ziel-Dienstflussvorlageninformationen, Ziel-Datennetzname, DNN, Informationen und Ziel-Single-Network-Slice-Selection-Assistance-Information, S-NSSAI, umfassen, und
in einem Fall, dass das Authentifizierungsergebnis anzeigt, dass die Authentifizierung erfolgreich ist, und die zweite Anforderungsnachricht ferner den Zielgruppenkennzeichner umfasst, umfasst die zweite Antwortnachricht Hinweisinformationen, die anzeigen, dass die zweite Anforderungsnachricht genehmigt ist; oder in einem Fall, dass die zweite Anforderungsnachricht den Zielgruppenkennzeichner nicht umfasst, umfasst die zweite Antwortnachricht ferner den Zielgruppenkennzeichner,
wobei der Zielgruppenkennzeichner einen Ziel-Dienstserver und/oder ein Zielterminal anzeigt, basierend auf dem Zielgruppenkennzeichner einen Zielgruppenkennzeichner eines Ziel-Datenpakets zu konfigurieren, das zu einer Zielgruppe des Ziel-Dienstflusses gehört.

13. Eine Kommunikationseinrichtung, umfassend:
einen oder mehrere Prozessoren; und
einen Speicher, der so konfiguriert ist, ein oder mehrere Programme zu speichern, wobei, wenn die ein oder mehreren Programme durch die einen oder mehreren Prozessoren ausgeführt werden, die Kommunikationseinrichtung befähigt wird, das Verfahren nach einem beliebigen der Ansprüche 1 bis 4 zu implementieren; oder
das Verfahren nach Anspruch 5; oder
das Verfahren nach Anspruch 6; oder
das Verfahren nach einem beliebigen der Ansprüche 7 bis 12.

## Revendications

1. Procédé d'optimisation de transmission de paquets de données, le procédé étant mis en œuvre par un dispositif réseau et le procédé comprenant:
l'obtention (S310) par le dispositif de réseau d'une détection de données cibles et d'une règle de traitement cible pour un flux de services cible;
la réception (S320) d'un paquet de données à transférer;
la détermination (S330), à partir du paquet de données à transférer, d'un paquet de données cible appartement à groupe cible du flux de service cible en fonction d'informations de distinction de paquet de données cible et d'un identifiant de groupe cible qui sont inclus dans la règle de détection de données cible;
la détermination (S340) d'informations de perte de paquets de données du paquet de données cible dans le groupe cible; et
la détermination (S350) que le groupe cible est un groupe à rejeter sur la base des informations de perte de paquets de données dans le groupe cible et d'un seuil de perte de paquets de données du groupe cible compris dans la règle de traitement cible;
la transmission du paquet de données à transférer est interrompue lorsqu'il est déterminé que le paquet de données cible appartient au groupe cible à rejeter.

2. Procédé selon la revendication 1, dans lequel l'obtention (S310) de la règle de détection des données cibles et de la règle de traitement des données cibles pour le flux de services cibles comprend:
l'obtention, par un élément de réseau de fonction de plan utilisateur et/ou le dispositif de réseau, de la règle de détection de données cible et de la règle de traitement cible à partir d'un élément de réseau de fonction de gestion de session.

3. Procédé selon la revendication 1 ou 2, dans lequel la règle de détection des données cibles comprend en outre une indication effective de liaison montante/liaison descendante; et
la détermination (S350) que le groupe cible est un groupe à rejeter sur la base des informations de perte de paquets de données dans le groupe cible et d'un seuil de perte de paquets de données de groupe cible compris dans la règle de traitement cible consiste à:
dans le cas où l'élément de réseau de fonction de plan utilisateur et/ou le dispositif de réseau détermineraient, sur la base de l'indication effective de liaison montante/liaison descendante, que la règle de détection de données cibles est effective pour un flux de service de liaison descendante et détermineraient que le paquet de données cibles appartient à un flux de service de liaison descendante du flux de service cible, déterminer si le groupe cible est le groupe cible à rejeter sur la base du seuil de perte de paquets de données du groupe cible et des informations de perte de paquets de données;
dans le cas où l'élément de réseau de fonction de plan utilisateur et/ou le dispositif de réseau détermineraient, sur la base de l'indication effective de liaison montante/liaison descendante, que la règle de détection de données cibles est effective pour un flux de service de liaison montante et détermineraient que le paquet de données cibles appartient à un flux de service de liaison montante du flux de service cible, déterminer si le groupe cible est le groupe cible à rejeter sur la base du seuil de perte de paquets de données du groupe cible et des informations de perte de paquets de données; ou
dans le cas où l'élément de réseau de fonction de plan utilisateur et/ou le dispositif de réseau détermineraient, sur la base de l'indication effective de liaison montante/liaison descendante, que la règle de détection de données cibles est effective pour un flux de service de liaison descendante/liaison montante, détecter séparément un flux de service de liaison montante et un flux de service de liaison descendante du flux de service cible et déterminer si le paquet cible auquel appartient le flux de service de liaison montante ou le flux de service de liaison descendante est le groupe cible à rejeter sur la base du seuil de perte de paquets de données du groupe cible et des informations de perte de paquets de données.

4. Procédé selon la revendication 1, comprenant en outre:
le rejet d'un paquet de données cible restant dans le groupe cible à rejeter.

5. Procédé de transmission de paquets de données, le procédé étant mis en œuvre par un élément de réseau de fonction de gestion de session, le procédé comprenant:
l'obtention (S1110) d'une règle de politique de traitement de paquets de données de groupe à partir d'un élément de réseau de fonction de contrôle de politique, la règle de politique de traitement de paquets de données de groupe comprenant un identifiant de groupe cible d'un flux de service cible, un seuil de perte de paquets de données de groupe cible et des informations de distinction de paquets de données cibles;
la génération (S1120) d'une règle de détection de données cibles pour le flux de service cible sur la base des informations de distinction des paquets de données cibles et de l'identifiant du groupe cible;
la génération (S1130) d'une règle de traitement cible pour le flux de service cible sur la base du seuil de perte de paquets de données du groupe cible; et
la transmission (S1140) de la règle de détection des données cibles et de la règle de traitement des données cibles à un dispositif réseau et/ou à un élément de réseau de fonction de plan utilisateur,
la règle de détection de données cible indiquant au dispositif de réseau et/ou à l'élément de réseau de fonction de plan utilisateur à déterminer, à partir du paquet de données à transférer reçu, un paquet de données cible appartement à un groupe cible du flux de service cible en fonction d'informations de distinction de paquets de données cible et d'un identifiant de groupe cible qui sont inclus dans la règle de détection de données cible; et
la règle de traitement cible indiquant au dispositif de réseau et/ou à l'élément de réseau de fonction de plan utilisateur à déterminer que le groupe cible est un groupe à rejeter sur la base des informations de perte de paquets de données dans le groupe cible et d'un seuil de perte de paquets de données de groupe cible compris dans la règle de traitement cible.

6. Procédé de transmission de paquets de données, le procédé étant mis en œuvre par un élément de réseau de fonction de contrôle de politique, le procédé comprenant:
l'obtention (S1210), par l'élément de réseau de fonction de contrôle de politique, d'informations de demande de traitement de paquets de données de groupe d'un flux de service cible à partir d'un élément de réseau de fonction d'application, les informations de demande de traitement de paquets de données de groupe comprenant un identifiant de groupe cible, un seuil de perte de paquets de données de groupe cible et des informations de distinction de paquets de données cible;
la génération (S1220) d'une règle de politique de traitement de paquets de données de groupe sur la base des informations de demande de traitement de paquets de données de groupe; et
la transmission (S1230) de la règle de politique de traitement de paquets de données de groupe à un élément de réseau de fonction de gestion de session,
dans lequel la règle de politique indique à l'élément de réseau de la fonction de gestion de session de générer une règle de détection de données cible pour le flux de service cible sur la base des informations de distinction de paquets de données cible et de l'identifiant de groupe cible; et
la règle de politique indique à l'élément de réseau de fonction de gestion de session de générer une règle de traitement cible pour le flux de service cible sur la base du seuil de perte de paquets de données de groupe cible, dans lequel la règle de traitement indique à un dispositif de réseau et/ou à un élément de réseau de fonction de plan utilisateur de déterminer qu'un groupe cible est un groupe cible à rejeter.

7. Procédé de transmission de paquets de données, le procédé étant mis en œuvre par un élément de réseau de fonction d'application, le procédé comprenant:
la transmission, par le groupe d'éléments de réseau de fonction d'application, des informations de demande de traitement de paquets de données d'un flux de service cible à un élément de réseau de fonction de contrôle de politique,
les informations de demande de traitement de paquets de données de groupe comprenant un identifiant de groupe cible, un seuil de perte de paquets de données de groupe cible et des informations de distinction de paquets de données cible; et
dans lequel les informations de demande indiquent à l'élément de réseau de fonction de contrôle de politique la génération d'une règle de politique de traitement de paquets de données de groupe et la transmission de la règle de politique de traitement de paquets de données de groupe à un élément de réseau de fonction de gestion de session, la règle de politique de traitement de paquets de données de groupe indiquant à l'élément de réseau de fonction de gestion de session, SMF, la génération d'une règle de traitement cible et dans lequel la règle de traitement cible indique à un dispositif réseau et/ou à un élément de réseau de fonction de plan utilisateur la détermination qu'un groupe cible est un groupe à rejeter sur la base du seuil de perte de paquets de données de groupe cible.

8. Procédé selon la revendication 7, dans lequel
la transmission des informations de demande de traitement de paquets de données de groupe à l'élément de réseau de fonction de contrôle de politique consiste à:
transmettre le seuil de perte de paquets de données cible et les informations de distinction de paquets de données cible à un élément de réseau de fonction d'exposition au réseau, et
le seuil de perte de paquets de données de groupe cible et les informations de distinction des paquets de données cibles indiquent à l'élément de réseau de fonction d'exposition au réseau la transmission des informations de distinction de paquets de données cible, l'identifiant de groupe cible et le seuil de perte de paquets de données de groupe cible à l'élément de réseau de fonction de contrôle de politique.

9. Procédé selon la revendication 8, dans lequel la transmission du seuil de perte de paquets de données cible et des informations de distinction des paquets de données cible à la fonction d'exposition de réseau, consiste à:
transmettre un premier message de demande à l'élément de réseau de fonction d'exposition de réseau, le premier message de demande comprenant des informations d'identification de fonction d'application, le seuil de perte de paquets de données de groupe cible et les informations de distinction des paquets de données cibles, et le premier message de demande indiquant à l'élément de réseau de fonction d'exposition de réseau l'authentification du premier message de demande et la génération d'un premier message de réponse basé sur un résultat d'authentification; et
recevoir le premier message de réponse retourné par l'élément de réseau de fonction d'exposition de réseau.

10. Procédé selon la revendication 9, dans lequel les informations de distinction de paquet de données cible comprennent au moins l'une parmi les informations de modèle de flux de service cible, les informations de nom de réseau de données cible, DNN, et les informations d'aide à la sélection d'une tranche de réseau unique cible, S-NSSAI; et
dans le cas où le résultat de l'authentification indiquerait que l'authentification réussit et que le premier message de demande comprend en outre l'identifiant de groupe cible, le premier message de réponse comprend des informations d'indication indiquant que le premier message de demande est approuvé; ou dans le cas où le premier message de demande ne comprendrait pas l'identifiant du groupe cible, le premier message de réponse comprend en outre l'identifiant de groupe cible,
l'identifiant de groupe cible indique un serveur de service cible et/ou un terminal cible pour configurer, sur la base de l'identifiant de groupe cible, un identifiant de groupe cible d'un paquet de données cible appartenant à un groupe cible du flux de service cible.

11. Procédé selon la revendication 8, dans lequel la transmission du seuil de perte de paquets de données cible et des informations de distinction des paquets de données cible à la fonction d'exposition de réseau, consiste à:
transmettre les informations d'identification de fonction d'application et les informations de distinction de paquet de données cible à l'élément de réseau de fonction d'exposition de réseau, les informations d'identification de fonction d'application et les informations de distinction de paquet de données cible indiquant à l'élément de réseau de la fonction d'exposition au réseau de stocker les informations d'identification de fonction d'application et les informations de distinction de paquet de données cible en association;
transmettre un second message de demande à l'élément de réseau de fonction d'exposition de réseau, le second message de demande comprenant les informations d'identification de fonction d'application et le seuil de perte de paquets de données de groupe cible, et le second message de demande indiquant à l'élément de réseau de fonction d'exposition de réseau d'authentifier le second message de demande, d'obtenir, par recherche, les informations de distinction de paquets de données cible sur la base des informations d'identification de fonction d'application dans le second message de demande après que l'authentification du second message de demande a réussi, et de générer un second message de réponse; et
recevoir le second message de réponse retourné par l'élément de réseau de fonction d'exposition de réseau.

12. Procédé selon la revendication 11, dans lequel les informations de distinction de paquet de données cible comprennent au moins l'une parmi les informations de modèle de flux de service cible, les informations de nom de réseau de données cible, DNN, et les informations d'aide à la sélection d'une tranche de réseau unique cible, S-NSSAI, et
dans le cas où le résultat de l'authentification indiquerait que l'authentification réussit et que le premier message de demande comprend en outre l'identifiant de groupe cible, le second message de réponse comprend des informations d'indication indiquant que le second message de demande est approuvé; ou dans le cas où le premier message de demande ne comprendrait pas l'identifiant du groupe cible, le second message de réponse comprend en outre l'identifiant de groupe cible,
l'identifiant de groupe cible indiquant un serveur de service cible et/ou un terminal cible pour configurer, sur la base de l'identifiant de groupe cible, un identifiant de groupe cible d'un paquet de données cible appartenant à un groupe cible du flux de service cible.

13. Dispositif de communication, comprenant:
un ou plusieurs processeurs; et
une mémoire, configurée pour stocker un ou plusieurs programmes, lorsque le ou les programmes sont exécutés par le ou les processeurs, le dispositif de communication est activé pour mettre en œuvre le procédé selon l'une quelconque des revendications 1 à 4; ou
le procédé selon la revendication 5; ou
le procédé selon la revendication 6; ou
le procédé selon l'une quelconque des revendications 7 à 12.
